(19) **Europäisches Patentamt / European Patent Office / Office européen des brevets**

(11) **EP 4 598 189 A1**

(12) **EUROPEAN PATENT APPLICATION**
published in accordance with Art. 153(4) EPC

(43) Date of publication:
**06.08.2025  Bulletin 2025/32**

(21) Application number: **23889010.7**

(22) Date of filing: **31.10.2023**

(51) International Patent Classification (IPC):
**H04W 72/04** $^{(2023.01)}$   **H04L 5/14** $^{(2006.01)}$

(52) Cooperative Patent Classification (CPC):
**H04L 5/14; H04W 72/04**

(86) International application number:
**PCT/KR2023/017067**

(87) International publication number:
**WO 2024/101748 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **11.11.2022  KR 20220150571**

(71) Applicant: **Samsung Electronics Co., Ltd.
Suwon-si, Gyeonggi-do 16677 (KR)**

(72) Inventors:
- **CHOE, Hyemin**
  **Suwon-si, Gyeonggi-do 16677 (KR)**
- **CHOI, Kyungjun**
  **Suwon-si, Gyeonggi-do 16677 (KR)**
- **SHIM, Jaeyeon**
  **Suwon-si, Gyeonggi-do 16677 (KR)**
- **JI, Hyoungju**
  **Suwon-si, Gyeonggi-do 16677 (KR)**

(74) Representative: **Nederlandsch Octrooibureau
P.O. Box 29720
2502 LS The Hague (NL)**

(54) **METHOD AND APPARATUS FOR CONFIGURING TIME RESOURCE FOR FULL-DUPLEX COMMUNICATION IN WIRELESS COMMUNICATION SYSTEM**

(57)    The present disclosure relates to a 5G or 6G communication system for supporting a higher data transmission rate. Particularly, a method performed by a UE in a wireless communication system, according to the present disclosure, may comprise the steps of: receiving, from a base station, time resource configuration information for subband full duplex (SBFD), the time resource configuration information including time location information for the SBFD and periodicity information for the SBFD; on the basis of the time resource configuration information, identifying a time resource of a subband for the SBFD; and transmitting, to the base station, an uplink signal on the basis of the time resource of the subband.

FIG.10

EP 4 598 189 A1

## Description

[Technical Field]

The disclosure relates to an operation of a terminal and a base station in a wireless communication system (or mobile communication system). Specifically, the disclosure relates to a method and an apparatus for full-duplex communication (or full-duplex radio (FDR)) in a wireless communication system (or mobile communication system).

[Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of communication systems, a demand for full duplex communication is increasing day by day.

[Disclosure of Invention]

[Technical Problem]

Based on the discussion as described above, the disclosure provides a device and a method capable of effectively providing services in a wireless communication system.

In addition, the disclosure provides a method and an apparatus for efficiently configuring/allocating time resources for full-duplex communication in a wireless communication system.

In addition, the disclosure provides a method and an apparatus for configuring/allocating time resources related to subband non-overlapping full duplex (SBFD) in a wireless communication system supporting SBFD communication.

[Solution to Problem]

A method performed by a terminal in a wireless communication system supporting full-duplex communication according to an embodiment of the disclosure includes receiving configuration information of a time resource for subband non-overlapping full-duplex (SBFD) communication from a base station, based on the configuration information, identifying an index of at least one symbol or slot corresponding to an available SBFD time resource in a frame configuration period, and based on the identified index, transmitting an uplink signal by using an uplink (UL) subband in a symbol supporting an SBFD operation.

In addition, a terminal in a wireless communication system supporting full-duplex communication according to an embodiment of the disclosure includes a transceiver and a processor configured to, through the transceiver, receive configuration information for subband non-overlapping full-duplex (SBFD) communication from a base station, based on the configuration information, identify an index of an available slot or symbol where an SBFD operation is possible in a configuration period, and through the transceiver, based on the identified index, transmit an uplink signal by using an SBFD uplink subband configured in a time resource where the SBFD operation is possible.

[Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system.

FIG. 5 illustrates a structure of a downlink control channel in a wireless communication system according to an embodiment of the disclosure.

FIG. 6 illustrates a method in which a base station and a UE transmit/receive data in consideration of a downlink data channel and a rate matching resource in a wireless communication system according to an embodiment of the disclosure.

FIG. 7 illustrates an example of frequency domain resource allocation with regard to a physical downlink shared channel (PDSCH) in a wireless communication system according to an embodiment of the disclosure.

FIG. 8 illustrates an example of time domain resource allocation with regard to a PDSCH in a wireless communication system according to an embodiment of the disclosure.

FIG. 9 illustrates an example of time domain resource allocation according to a subcarrier spacing with regard to a data channel and a control channel in a wireless communication system according to an embodiment of the disclosure.

FIG. 10 illustrates an example of TDD UL-DL resource allocation according to SBFD resource configuration information according to an embodiment of the disclosure.

FIG. 11 is a diagram illustrating an example of SBFD resource allocation in a case where a symbol not supporting an SBFD operation is included in an SBFD system according to an embodiment of the disclosure.

FIG. 12 is a diagram illustrating an example of indicating an SBFD time resource position in an SBFD system according to an embodiment of the disclosure.

FIG. 13 is a diagramd illustrating an example of SBFD time resource allocation using multiple indicators in an SBFD system according to an embodiment of the disclosure.

FIG. 14 illustrates a structure of a UE in a wireless communication system according to an embodiment of the disclosure.

FIG. 15 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a wireless access unit, a base station controller, a transmission and reception point (TRP), or a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

In the following description, a base station (BS) is an entity that allocates resources to terminals, and may be at least one of a gNode B, a gNB, an eNode B, an eNB, a Node B, a wireless access unit, a base station controller, and a node on a network. Furthermore, the base station may be a network entity including at least one of an integrated access and backhaul-donor (IAB-donor) which is a gNB providing network access to a UE(s) via a network of backhaul and access links, and an IAB-node which is an RAN node supporting an NR access link(s) to a UE(s) and supporting NR backhaul links to the IAB-donor or any other IAB-node. A user equipment (UE) may be at least one of a terminal, a mobile station (MS), a cellular phone, a smartphone, a computer, or a multimedia system capable of performing a communication function. A terminal may perform radio access via an IAB-node and transmit/receive data to/from an IAB-donor connected to at least one IAB-node via a backhaul link.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards. Therefore, the disclosure is not limited by the terms as used herein, and other terms referring to subjects having equivalent technical meanings may be used.

[NR time-frequency resources]

Hereinafter, a frame structure of a 5G system will be described in more detail with reference to the accompanying drawings.

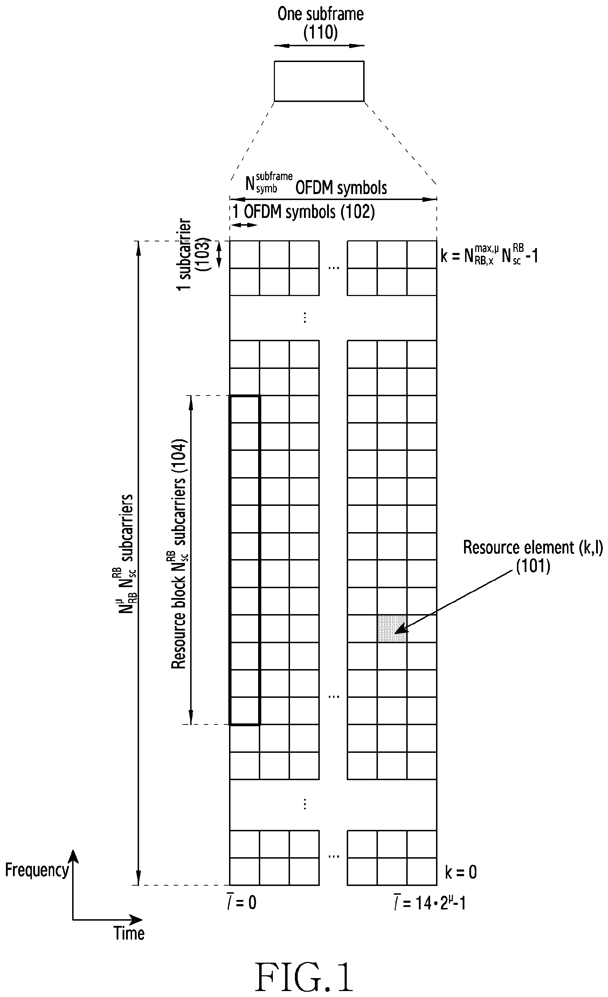

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104. In FIG. 1, $N_{symb}^{subframe,\mu}$ is the number of OFDM symbols per subframe 110 for the subcarrier spacing $\mu$ and a more detailed description of the resource structure in the 5G system may refer to standard TS 38.211 section 4.

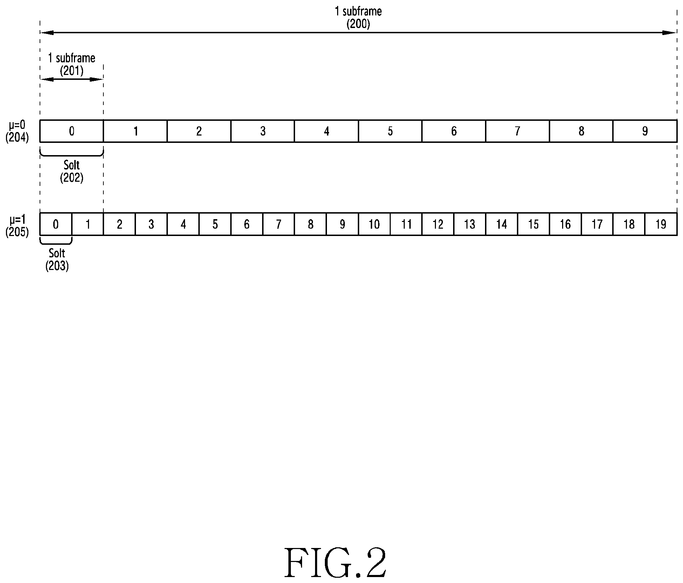

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| $\mu$ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

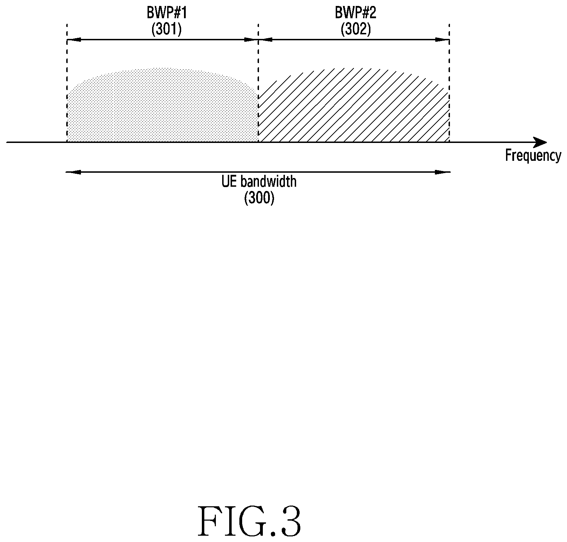

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                    SEQUENCE {
    bwp-Id                    BWP-Id,
     (bandwidth part identifier)
    locationAndBandwidth       INTEGER (1..65536),
    (bandwidth part location)
    subcarrierSpacing          ENUMERATED {n0, n1, n2, n3, n4, n5},
    (subcarrier spacing)
    cyclicPrefix               ENUMERATED { extended }
    (cyclic prefix)
}
```

In Table 2, "locationAndBandwidth" refers to the location and bandwidth of a corresponding bandwidth part in the frequency domain, "subcarrierSpacing" refers to a subcarrier spacing to be used in the corresponding bandwidth part, and "cyclicPrefix" refers to whether ab extended cyclic prefix (CP) is used for the corresponding bandwidth part.

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The control resource set and the search space configured through the MIB may be referred to as a common control resource set and a common search space, respectively. The base station may notify the UE of configuration information, such as frequency allocation information, time allocation information, and numerology, regarding control resource region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The control resource set may be referred to as a control region, a control resource region, etc.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured through the MIB may be regarded as an initial bandwidth part, and the UE may receive, through the configured initial bandwidth part, a PDSCH through which an SIB is transmitted. The initial bandwidth part may be used not only for the purpose of receiving the SIB, but also for other system information (OSI), paging, random access, or the like.

[Bandwidth part (BWP) switching]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |

(continued)

| μ | NR Slot length (ms) | BWP switch delay $T_{BWP}$ (slots) | |
| --- | --- | --- | --- |
| | | Type 1[Note 1] | Type 2[Note 1] |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and from this, control resource set (CORESET) #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

- Identifier for DCI formats - [1] bit

- Frequency domain resource assignment - $[\lceil \log_2(N_{RB}^{UL,BWP}(N_{RB}^{UL,BWP}+1)/2)\rceil]$ bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

(continued)

* For resource allocation type 0, $\lceil N_{\mathrm{RB}}^{\mathrm{UL,BWP}} / P \rceil$ bits

* For resource allocation type 1, $\lceil \log_2(N_{\mathrm{RB}}^{\mathrm{UL,BWP}} (N_{\mathrm{RB}}^{\mathrm{UL,BWP}} + 1)/2) \rceil$ bits

- Time domain resource assignment -1, 2, 3, or 4 bits
- Virtual resource block (VRB)-to-physical resource block (PRB) mapping - 0 or 1 bit, only for resource allocation type 1.

    * 0 bit if only resource allocation type 0 is configured; * 1 bit otherwise.
- Frequency hopping flag - 0 or 1 bit, only for resource allocation type 1.

    * 0 bit if only resource allocation type 0 is configured;

    * 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits

    * 1 bit for semi-static HARQ-ACK codebook;

    * 2 bits for dynamic HARQ-ACK codebook with single HARQ-ACK codebook.
- 2nd downlink assignment index - 0 or 2 bits

    * 2 bits for dynamic HARQ-ACK codebook with two HARQ-ACK sub-codebooks;

    * 0 bit otherwise.
- TPC command for scheduled PUSCH - 2 bits

- SRS resource indicator - $\left\lceil \log_2\left( \sum_{k=1}^{L_{\max}} \binom{N_{\mathrm{SRS}}}{k} \right) \right\rceil$ or $\lceil \log_2(N_{\mathrm{SRS}}) \rceil$ bits

    * $\left\lceil \log_2\left( \sum_{k=1}^{L_{\max}} \binom{N_{\mathrm{SRS}}}{k} \right) \right\rceil$ bits for non-codebook based PUSCH transmission;

    * $\lceil \log_2(N_{\mathrm{SRS}}) \rceil$ bits for codebook based PUSCH transmission.
- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

| - Identifier for DCI formats - [1] bit |
| --- |

(continued)

- Frequency domain resource assignment- $[\lceil \log_2(N_{RB}^{DL,BWP}(N_{RB}^{DL,BWP}+1)/2)\rceil]$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

　　　* For resource allocation type 0, $\lceil N_{RB}^{DL,BWP}/P \rceil$ bits

　　　* For resource allocation type 1, $\lceil \log_2(N_{RB}^{DL,BWP}(N_{RB}^{DL,BWP}+1)/2)\rceil$ bits

- Time domain resource assignment -1, 2, 3, or 4 bits
- VRB-to-PRB mapping - 0 or 1 bit, only for resource allocation type 1.
　　　* 0 bit if only resource allocation type 0 is configured;
　　　* 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits

(continued)

| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, and Search Space]

Hereinafter, a downlink control channel in a 5G communication system will be described in more detail with reference to the accompanying drawings.

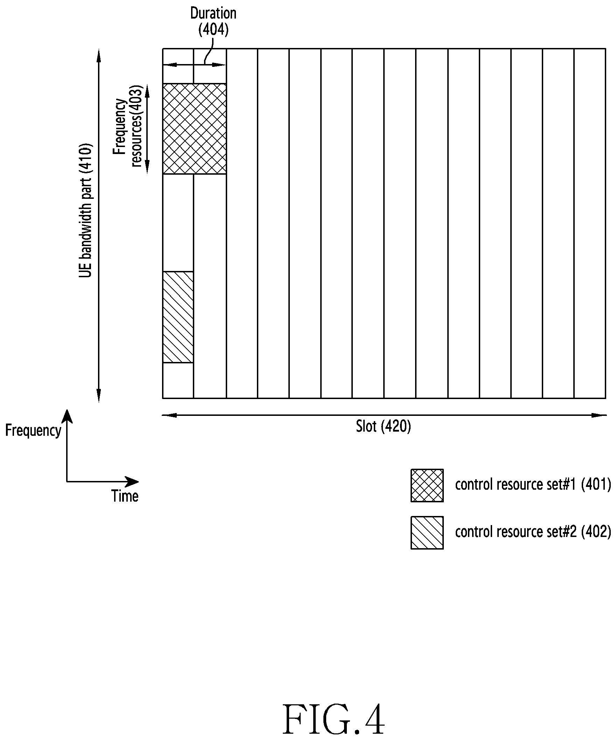

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 403 within the entire UE bandwidth part 420 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G as described above may be configured for a UE by a base station through upper layer signaling (for example, SI, MIB, RRC signaling, etc.). The description that a control resource set is configured for a UE means that information such as a control resource set identity, the control resource set's frequency location, and the control resource set's symbol duration is provided. For example, configuration information regarding the control resource set may include the following pieces of information in Table 8.

[Table 8]

```
ConControlResourceSet  ::=                 SEQUENCE {
    -- Corresponds  to  L1  parameter 'CORESET-ID'


    controlResourceSetId           ControlResourceSetId,
        (control resource set identity)
    frequencyDomainResources       BIT  STRING  (SIZE  (45)),
        (frequency domain resource assignment information)
    duration                       INTEGER  (1..maxCoReSetDuration),
        (time domain resource assignment information)
    cce-REG-MappingType                    CHOICE  {
        (CCE-to-REG mapping type)
     interleaved                   SEQUENCE  {


         reg-BundleSize                ENUMERATED  {n2,  n3,  n6},
             (REG bundle size)
```

| | |
|---|---|
| precoderGranularity | ENUMERATED {sameAsREG-bundle, allContiguousRBs}, |
| interleaverSize | ENUMERATED {n2, n3, n6} |
| (interleaver size) | |
| shiftIndex | INTEGER(0..maxNrofPhysicalResourceBlocks-1) |
| | OPTIONAL |
| (interleaver shift) | |
| }, | |
| nonInterleaved | NULL |
| }, | |
| tci-StatesPDCCH | SEQUENCE(SIZE (1..maxNrof |
| TCI-StatesPDCCH)) OF TCI-StateId | OPTIONAL, |
| (QCL configuration information) | |
| tci-PresentInDCI | ENUMERATED {enabled} |
| | OPTIONAL,      ... Need S |
| } | |

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding CORESET.

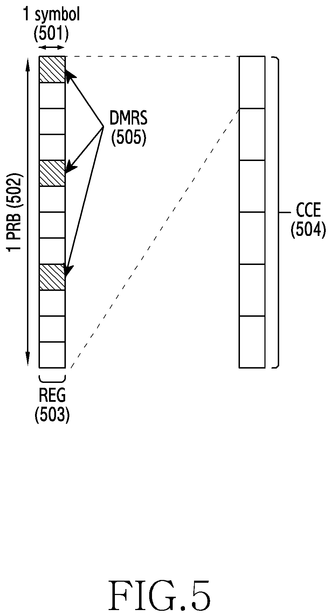

FIG. 5 illustrates an example of a basic unit of time and frequency resources constituting a downlink control channel available in a 5G system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, configuration information for the search space regarding the PDCCH may include the following pieces of information given in Table 9 below.

[Table 9]

```
SearchSpace ::=                          SEQUENCE {

    -- Identity of the search space. SearchSpaceId = 0 identifies the SearchSpace
configured via PBCH (MIB) or ServingCellConfigCommon.

    searchSpaceId                        SearchSpaceId,
    (search space identity)

    controlResourceSetId                 ControlResourceSetId,
    (control resource set identity)

    monitoringSlotPeriodicityAndOffset   CHOICE {
    (monitoring slot level periodicity)

        sl1                                  NULL,

        sl2                                  INTEGER  (0..1),

        sl4                                  INTEGER  (0..3),

        sl5                              INTEGER  (0..4),

        sl8                                  INTEGER  (0..7),

        sl10                                 INTEGER  (0..9),

        sl16                                 INTEGER  (0..15),

        sl20                                 INTEGER  (0..19)

    }
                                     OPTIONAL,

    duration (monitoring duration)           INTEGER  (2..2559)
    monitoringSymbolsWithinSlot              BIT  STRING  (SIZE (14))
                                     OPTIONAL,
```

```
(monitoring symbols within slot)
nrofCandidates                          SEQUENCE {
(number of PDCCH candidates for each aggregation level)
        aggregationLevel1                       ENUMERATED {n0, n1, n2, n3, n4,
n5, n6, n8},
        aggregationLevel2                       ENUMERATED {n0, n1, n2, n3, n4,
n5, n6, n8},
        aggregationLevel4                       ENUMERATED {n0, n1, n2, n3, n4,
n5, n6, n8},
        aggregationLevel8                       ENUMERATED {n0, n1, n2, n3, n4,
n5, n6, n8},
        aggregationLevel16                      ENUMERATED {n0, n1, n2, n3, n4,
n5, n6, n8}
    },


searchSpaceType                         CHOICE {
(search space type)
        -- Configures this search space as common search space (CSS) and DCI formats
to monitor.
        common                                  SEQUENCE {
(common search space)
        }
        ue-Specific                             SEQUENCE {
(UE-specific search space)
        -- Indicates whether the UE monitors in this USS for DCI formats 0-0 and 1-0 or
for formats 0-1 and 1-1.
        formats                                 ENUMERATED {formats0-0-And-1
-0, formats0-1-And-1-1},
        ...
}
```

According to the configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2. In X-RNTI and Y-RNTI, "X" and "Y" may correspond to one of various RNTIs described in the disclosure.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI (RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI (INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is inten ded for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- *L*: aggregation level
- $n_{CI}$: carrier index
- $N_{CCE,p}$: total number of CCEs existing in control resource set *p*
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- *i* = 0, ..., *L* -1
- $Y_{p,n_{s,f}^{\mu}} = \left( A_p \cdot Y_{p,n_{s,f}^{\mu}-1} \right) mod\ D$ , $Y_{p,-1} = n_{RNTI} \neq 0$ , $A_p = 39827\ for\ pmod\ 3 = 0$ , $A_p = 39829\ for\ pmod\ 3 = 1$ , $A_p = 39839\ for\ pmod\ 3 = 2$, *D* = 65537
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each timepoint may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDCCH: blind decoding (BD)/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^{\mu}$ of PDCCH candidates that the UE can monitor may follow Table 11 given below if the same is defined with reference to a slot in a cell configured to have a subcarrier spacing of $15 \cdot 2^{\mu}$ kHz, and may follow Table 12 given below if the same is defined with reference to a span.

[Table 11]

| $\mu$ | Maximum number of PDCCH candidates per slot and per serving cell ($M^{\mu}$) |
|---|---|
| 0 | 44 |
| 1 | 36 |
| 2 | 22 |
| 3 | 20 |

[Table 12]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^\mu$ of CCEs constituting the entire search space (as used herein, the entire search space refers to the entire CCE set corresponding to a union domain of multiple search space sets) may follow Table 13 given below if the same is defined with reference to a slot in a cell configured to have a subcarrier spacing of $15\cdot2^\mu$ kHz, and may follow Table 14 given below if the same is defined with reference to a span.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific timepoint may be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific timepoint. If condition A is not satisfied at a specific timepoint, the UE may select and monitor only some of search space sets configured to satisfy condition A at the corresponding timepoint, and the base station may transmit a PDCCH to the selected search space set.
A method for selecting some search spaces from all configured search space sets may follow methods given below.
If condition A regarding a PDCCH fails to be satisfied at a specific timepoint (slot), the UE (or the base station) may preferentially select a search space set having a search space type configured as a common search space, among search space sets existing at the corresponding timepoint, over a search space set configured as a UE-specific search space.
If all search space sets configured as common search spaces have been selected (that is, if condition A is satisfied even after all search spaces configured as common search spaces have been selected), the UE (or the bae station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

- The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol# 1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

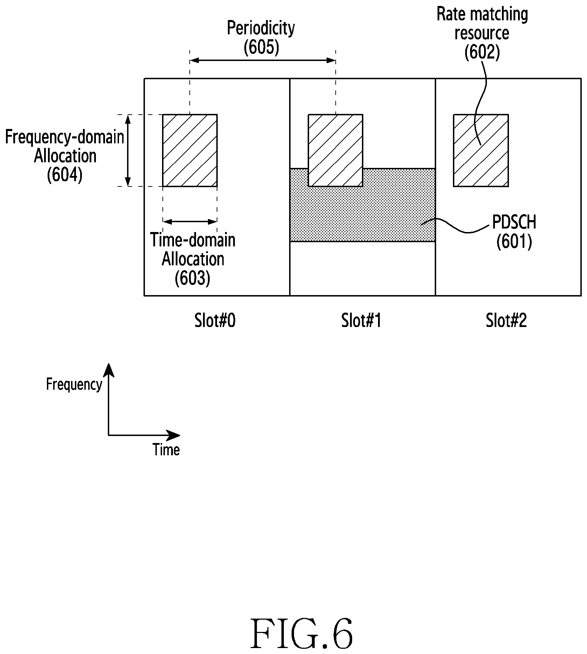

FIG. 6 illustrates a method in which a base station and a UE transmit/receive data in consideration of a downlink data channel and a rate matching resource in a wireless communication system according to an embodiment of the disclosure.

FIG. 6 illustrates a downlink data channel (PDSCH) 601 and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

RB symbol level

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

RE level

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.
- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. In NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 15 shows a ServingCellConfig IE including the CRS patterns, and Table 16 shows a RateMatchPatternLTE-CRS IE including at least one parameter regarding CRS patterns.

[Table 15]

```
ServingCellConfig ::=                    SEQUENCE {
        tdd-UL-DL-ConfigurationDedicated              TDD-UL-DL-ConfigDedicated
OPTIONAL,     -- Cond TDD
        initialDownlinkBWP                            BWP-DownlinkDedicated
OPTIONAL,     -- Need M
        downlinkBWP-ToReleaseList                     SEQUENCE (SIZE
(1..maxNrofBWPs))  OF  BWP-Id                         OPTIONAL,
-- Need N
        downlinkBWP-ToAddModList                      SEQUENCE (SIZE
(1..maxNrofBWPs))  OF  BWP-Downlink                   OPTIONAL,
-- Need N
        firstActiveDownlinkBWP-Id                     BWP-Id
OPTIONAL,     -- Cond SyncAndCellAdd
        bwp-InactivityTimer              ENUMERATED {ms2, ms3, ms4, ms5,
ms6, ms8, ms10, ms20, ms30,
                                                 ms40,ms50,    ms60,
ms80,ms100, ms200,ms300, ms500,
                                                 ms750,        ms1280,
ms1920, ms2560, spare10, spare9, spare8,
                                                 spare7,        spare6,
spare5, spare4, spare3, spare2, spare1 }  OPTIONAL,    --Need R
        defaultDownlinkBWP-Id                         BWP-Id
OPTIONAL,     -- Need S
        uplinkConfig                                  UplinkConfig
OPTIONAL,     -- Need M
        supplementaryUplink                           UplinkConfig
OPTIONAL,     -- Need M
        pdcch-ServingCellConfig                    SetupRelease { PDCCH-
ServingCellConfig }                            OPTIONAL,     -- Need M
        pdsch-ServingCellConfig                    SetupRelease { PDSCH-
ServingCellConfig }                            OPTIONAL,     -- Need M
        csi-MeasConfig                           SetupRelease { CSI-MeasConfig }
OPTIONAL,     -- Need M
        sCellDeactivationTimer              ENUMERATED {ms20, ms40, ms80,
ms160, ms200, ms240,
                                                 ms320,        ms400,
ms480, ms520, ms640, ms720,
                                                 ms840,        ms1280,
spare2,spare1}            OPTIONAL,     -- Cond ServingCellWithoutPUCCH
        crossCarrierSchedulingConfig                 CrossCarrierSchedulingConfig
OPTIONAL,     -- Need M
        tag-Id                                   TAG-Id,
        dummy                                        ENUMERATED {enabled}
OPTIONAL,     -- Need R
```

```
        pathlossReferenceLinking                 ENUMERATED {spCell, sCell}
OPTIONAL,      -- Cond SCellOnly
        servingCellMO                                          MeasObjectId
OPTIONAL,      -- Cond MeasObject

        ...,
        [[
        lte-CRS-ToMatchAround                             SetupRelease  {
RateMatchPatternLTE-CRS  }                         OPTIONAL,      --
Need M
        rateMatchPatternToAddModList                 SEQUENCE    (SIZE
(1..maxNrofRateMatchPatterns)) OF RateMatchPattern    OPTIONAL,    -- Need
N
        rateMatchPatternToReleaseList                SEQUENCE    (SIZE
(1..maxNrofRateMatchPatterns)) OF  RateMatchPatternId  OPTIONAL,    -- Need
N
        downlinkChannelBW-PerSCS-List        SEQUENCE (SIZE (1..maxSCSs))
OF SCS-SpecificCarrier                       OPTIONAL     -- Need S
        ]],
        [[
        supplementaryUplinkRelease                    ENUMERATED   {true}
OPTIONAL,      -- Need N
        tdd-UL-DL-ConfigurationDedicated-IAB-MT-r16          TDD-UL-DL-
ConfigDedicated-IAB-MT-r16                     OPTIONAL,      -- Cond
TDD_IAB
        dormantBWP-Config-r16                   SetupRelease { DormantBWP-
Config-r16 }                              OPTIONAL,      -- Need M
        ca-SlotOffset-r16                CHOICE {
            refSCS15kHz                       INTEGER (-2..2),
            refSCS30KHz                       INTEGER (-5..5),
            refSCS60KHz                       INTEGER (-10..10),
            refSCS120KHz                      INTEGER (-20..20)
        }
OPTIONAL,      -- Cond AsyncCA
        channelAccessConfig-r16                 SetupRelease { ChannelAccessConfig-
r16 }                              OPTIONAL,      -- Need M
        intraCellGuardBandsDL-List-r16          SEQUENCE (SIZE (1..maxSCSs)) OF
IntraCellGuardBandsPerSCS-r16           OPTIONAL,      -- Need S
        intraCellGuardBandsUL-List-r16          SEQUENCE (SIZE (1..maxSCSs)) OF
IntraCellGuardBandsPerSCS-r16           OPTIONAL,      -- Need S
        csi-RS-ValidationWith-DCI-r16             ENUMERATED    {enabled}
OPTIONAL,      -- Need R
        lte-CRS-PatternList1-r16                SetupRelease { LTE-CRS-PatternList-
r16 }                              OPTIONAL,      -- Need M
        lte-CRS-PatternList2-r16                SetupRelease { LTE-CRS-PatternList-
r16 }                              OPTIONAL,      -- Need M
        crs-RateMatch-PerCORESETPoolIndex-r16        ENUMERATED    {enabled}
OPTIONAL,      -- Need R
        enableTwoDefaultTCI-States-r16                ENUMERATED    {enabled}
OPTIONAL,      -- Need R
```

```
        enableDefaultTCI-StatePerCoresetPoolIndex-r16    ENUMERATED    {enabled}
OPTIONAL,      -- Need R
        enableBeamSwitchTiming-r16                       ENUMERATED    {true}
OPTIONAL,      -- Need R
        cbg-TxDiffTBsProcessingType1-r16                 ENUMERATED    {enabled}
OPTIONAL,      -- Need R
        cbg-TxDiffTBsProcessingType2-r16                 ENUMERATED    {enabled}
OPTIONAL      -- Need R
        ]]
    }
```

[Table 16]

–   *RateMatchPatternLTE-CRS*

The IE *RateMatchPatternLTE-CRS* is used to configure a pattern to rate match around LTE CRS. See TS 38.214 [19], clause 5.1.4.2.

**RateMatchPatternLTE-CRS information element**

```
-- ASN1START
-- TAG-RATEMATCHPATTERNLTE-CRS-START

RateMatchPatternLTE-CRS ::=          SEQUENCE {
       carrierFreqDL                      INTEGER (0..16383),
       carrierBandwidthDL                    ENUMERATED {n6, n15, n25,
n50, n75, n100, spare2, spare1},
       mbsfn-SubframeConfigList             EUTRA-MBSFN-
SubframeConfigList                              OPTIONAL,
-- Need M
       nrofCRS-Ports                      ENUMERATED {n1, n2, n4},
       v-Shift                            ENUMERATED {n0, n1, n2, n3, n4,
n5}
   }

LTE-CRS-PatternList-r16 ::=          SEQUENCE (SIZE (1..maxLTE-CRS-
Patterns-r16)) OF RateMatchPatternLTE-CRS

   -- TAG-RATEMATCHPATTERNLTE-CRS-STOP
   -- ASN1STOP
```

| *RateMatchPatternLTE-CRS* 필드 descriptions |
|---|
| *carrierBandwidthDL* <br> BW of the LTE carrier in number of PRBs (see TS 38.214 [19], clause 5.1.4.2). |
| *carrierFreqDL* <br> Center of the LTE carrier (see TS 38.214 [19], clause 5.1.4.2). |
| *mbsfn-SubframeConfigList* <br> LTE MBSFN subframe configuration (see TS 38.214 [19], clause 5.1.4.2). |
| *nrofCRS-Ports* <br> Number of LTE CRS antenna port to rate-match around (see TS 38.214 [19], clause 5.1.4.2). |
| *v-Shift* <br> Shifting value v-shift in LTE to rate match around LTE CRS (see TS 38.214 [19], clause 5.1.4.2). |

[PDSCH: regarding frequency resource allocation]

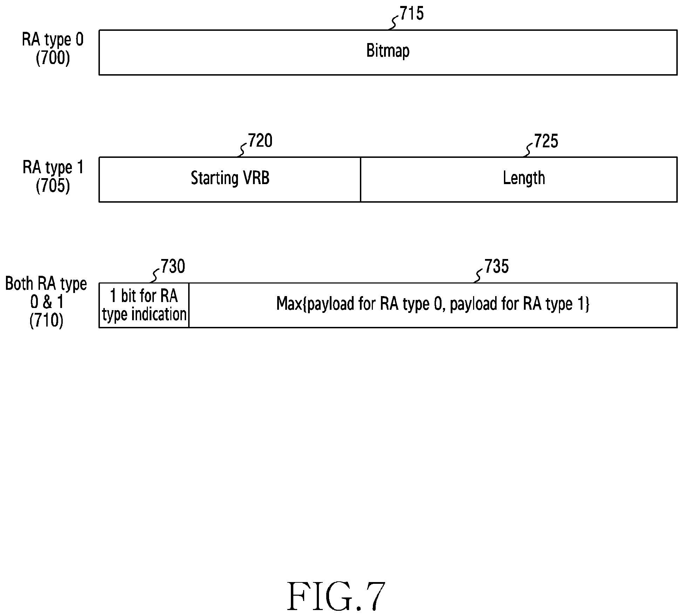

FIG. 7 illustrates an example of frequency domain resource allocation with regard to a physical downlink shared channel (PDSCH) in a wireless communication system according to an embodiment of the disclosure;
FIG. 7 illustrates three frequency domain resource allocation methods of type 0 700, type 1 705, and dynamic switch 710 which can be configured through an upper layer in an NR wireless communication system.

Referring to FIG. 7, in the case in which a UE is configured to use only resource allocation type-0 through upper layer signaling (700), partial downlink control information (DCI) for allocating a PDSCH to the UE includes a bitmap 715 including NRBG bits. The conditions for this will be described again later. As used herein, NRBG refers to the number of resource block groups (RBGs) determined according to the BWP size allocated by a BWP indicator and upper layer parameter rbg-Size, as in Table 17 below, and data is transmitted in RBGs indicated as "1" by the bitmap.

[Table 17]

| Bandwidth Part Size | Configuration 1 | Configuration 2 |
|:---:|:---:|:---:|
| 1 - 36 | 3 | 4 |
| 37 - 72 | 4 | 8 |
| 73 - 144 | 8 | 16 |
| 145 - 275 | 16 | 16 |

In the case in which the UE is configured to use only resource type 1 through upper layer signaling (705), partial DCI includes frequency domain resource allocation information including $[log_2(N_{RB}^{DL,BWP}(N_{RB}^{DL,BWP}+1)/2]$ bits. The conditions for this will be described again later. The base station may thereby configure a starting virtual resource block (starting VRB) 720 and the length 725 of a frequency domain resource allocated continuously therefrom.

In the case in which the UE is configured to use both resource type 0 and resource type 1 through upper layer signaling (710), partial DCI for allocating a PDSCH to the corresponding UE includes frequency domain resource allocation information including as many bits as the larger value 735 between the payload 715 for configuring resource type 0 and the payload 720 and 725 for configuring resource type 1. The conditions for this will be described again later. One bit may be added to the foremost part (MSB) of the frequency domain resource allocation information inside the DCII, and if the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 18 or Table 19 below may be transmitted from the base station to the UE.

[Table 18]

| *PDSCH-TimeDomainResourceAllocationList information element* | |
|---|---|
| PDSCH-TimeDomainResourceAllocationList ::= PDSCH-TimeDomainResourceAllocation | SEQUENCE (SIZE(1..maxNrofDL-Allocations)) OF |
| PDSCH-TimeDomainResourceAllocation ::=     k0 INTEGER(0..32)    OPTIONAL,    -- Need S      (PDCCH-to-PDSCH timing, slot unit) | SEQUENCE { |
|    mappingType     (PDSCH mapping type) | ENUMERATED {typeA, typeB}, |
|   startSymbolAndLength   (start symbol and length of PDSCH) } | INTEGER (0..127) |

[Table 19]

| PUSCH-TimeDomainResourceAllocationList information element |
|---|
| PUSCH-TimeDomainResourceAllocationList ::=    SEQUENCE (SIZE(1..maxNrofUL-Allocations)) OF PUSCH-TimeDomainResourceAllocation |

| |
|---|
| PUSCH-TimeDomainResourceAllocation ::=        SEQUENCE {<br>        k2                                                INTEGER(0..32) OPTIONAL,    -- Need S<br>            (PDCCH-to-PUSCH timing, slot unit)<br>                mappingType                        ENUMERATED  {typeA, typeB},<br>                (PUSCH mapping type)<br>            startSymbolAndLength                INTEGER (0..127)<br>                (start symbol and length of PUSCH)<br>        } |

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

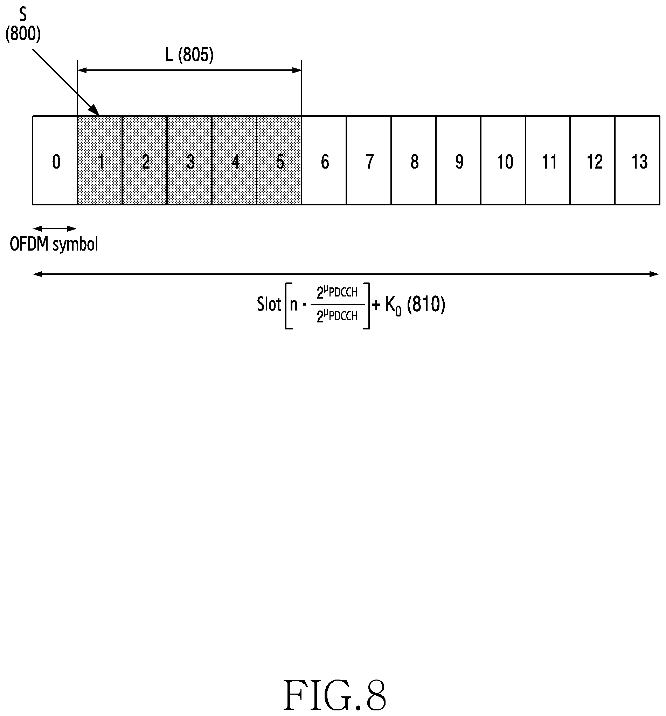

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 800 and length 805 within one slot 810 dynamically indicated through DCI..

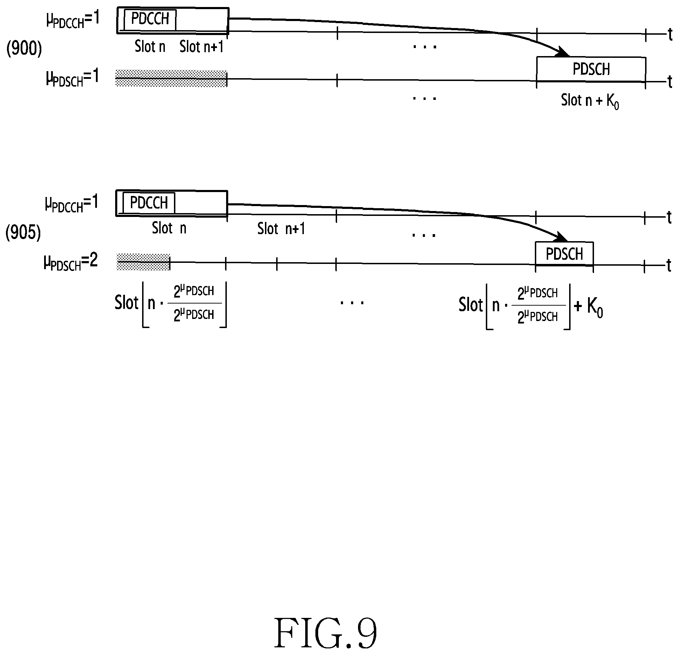

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing (9-00, $\mu_{PDSCH} = \mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings (9-05, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through upper signaling. If PUSCH transmission is operated by a configured grant, parameters applied to the PUSCH transmission are applied through configuredGrantConfig (upper signaling) in Table 20 except for dataScramblingIdentityPUSCH, txConfig, codebookSubset, maxRank, and scaling of UCI-OnPUSCH, which are provided by pusch-Config (upper signaling) in Table 21. If provided with transformPrecoder inside configuredGrantConfig (upper signaling) in Table 20, the UE applies tp-pi2BPSK inside pusch-Config in Table 21 to PUSCH transmission operated by a configured grant.

[Table 20]

```
ConfiguredGrantConfig ::=              SEQUENCE {
    frequencyHopping                              ENUMERATED {intraSlot, interSlot}
OPTIONAL,    -- Need S,
    cg-DMRS-Configuration         DMRS-UplinkConfig,
    mcs-Table                                     ENUMERATED  {qam256,
qam64LowSE}                                   OPTIONAL,    -- Need S
    mcs-TableTransformPrecoder         ENUMERATED   {qam256,  qam64LowSE}
OPTIONAL,    -- Need S
    uci-OnPUSCH                              SetupRelease { CG-UCI-OnPUSCH }
OPTIONAL,    -- Need M
    resourceAllocation                   ENUMERATED  {  resourceAllocationType0,
resourceAllocationType1, dynamicSwitch },
    rbg-Size                                      ENUMERATED {config2}
OPTIONAL,    -- Need S
    powerControlLoopToUse          ENUMERATED {n0, n1},
    p0-PUSCH-Alpha                       P0-PUSCH-AlphaSetId,
```

```
        transformPrecoder                          ENUMERATED  {enabled,  disabled}
OPTIONAL,      -- Need S
        nrofHARQ-Processes                         INTEGER(1..16),
        repK                                       ENUMERATED  {n1,  n2,
n4, n8},
        repK-RV                                    ENUMERATED  {s1-0231, s2-
0303, s3-0000}                        OPTIONAL,      -- Need R
        periodicity                               ENUMERATED  {
                                                   sym2,  sym7,  sym1x14,
sym2x14, sym4x14, sym5x14, sym8x14, sym10x14, sym16x14, sym20x14,
                                                   sym32x14,  sym40x14,
sym64x14, sym80x14, sym128x14, sym160x14, sym256x14, sym320x14, sym512x14,
                                                   sym640x14,
sym1024x14, sym1280x14, sym2560x14, sym5120x14,
                                                   sym6,         sym1x12,
sym2x12, sym4x12, sym5x12, sym8x12, sym10x12, sym16x12, sym20x12, sym32x12,
                                                   sym40x12,    sym64x12,
sym80x12, sym128x12, sym160x12, sym256x12, sym320x12, sym512x12, sym640x12,
                                                   sym1280x12,
sym2560x12
        },
        configuredGrantTimer                       INTEGER  (1..64)
OPTIONAL,      -- Need R
        rrc-ConfiguredUplinkGrant                  SEQUENCE {
            timeDomainOffset                       INTEGER (0..5119),
            timeDomainAllocation                   INTEGER   (0..15),
            frequencyDomainAllocation              BIT STRING (SIZE(18)),
            antennaPort                            INTEGER (0..31),
            dmrs-SeqInitialization                 INTEGER  (0..1)
OPTIONAL,      -- Need R
                precodingAndNumberOfLayers         INTEGER (0..63),
                srs-ResourceIndicator              INTEGER  (0..15)
OPTIONAL,      -- Need R
            mcsAndTBS
INTEGER (0..31),
                frequencyHoppingOffset                         INTEGER  (1..
maxNrofPhysicalResourceBlocks-1)         OPTIONAL,      -- Need R
```

```
        pathlossReferenceIndex                                                    INTEGER
(0..maxNrofPUSCH-PathlossReferenceRSs-1),

            ...
        }
OPTIONAL,      -- Need R

        ...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 21, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 21, the UE does not expect scheduling through DCI format 0_1.

[Table 21]

```
PUSCH-Config ::=                            SEQUENCE {
        dataScramblingIdentityPUSCH                          INTEGER    (0..1023)
OPTIONAL,      -- Need S
        txConfig                            ENUMERATED {codebook, nonCodebook}
OPTIONAL,      -- Need S
        dmrs-UplinkForPUSCH-MappingTypeA          SetupRelease { DMRS-UplinkConfig }
OPTIONAL,      -- Need M
        dmrs-UplinkForPUSCH-MappingTypeB          SetupRelease { DMRS-UplinkConfig }
OPTIONAL,      -- Need M
```

```
        pusch-PowerControl
OPTIONAL,      -- Need M
        frequencyHopping                                              ENUMERATED {intraSlot,
interSlot}                                          OPTIONAL,     -- Need S
        frequencyHoppingOffsetLists              SEQUENCE (SIZE (1..4)) OF INTEGER (1..
maxNrofPhysicalResourceBlocks-1)
OPTIONAL,      -- Need M
        resourceAllocation                       ENUMERATED { resourceAllocationType0,
resourceAllocationType1, dynamicSwitch},
        pusch-TimeDomainAllocationList                      SetupRelease  {   PUSCH-
TimeDomainResourceAllocationList }         OPTIONAL,      -- Need M
        pusch-AggregationFactor                          ENUMERATED { n2, n4, n8 }
OPTIONAL,      -- Need S
        mcs-Table                                              ENUMERATED {qam256,
qam64LowSE}                                       OPTIONAL,     -- Need S
        mcs-TableTransformPrecoder               ENUMERATED {qam256, qam64LowSE}
OPTIONAL,      -- Need S
        transformPrecoder                                      ENUMERATED {enabled,
disabled}                                       OPTIONAL,     -- Need S
        codebookSubset                                               ENUMERATED
{fullyAndPartialAndNonCoherent, partialAndNonCoherent,nonCoherent}
OPTIONAL, -- Cond codebookBased
        maxRank                                                      INTEGER (1..4)
OPTIONAL, -- Cond codebookBased
        rbg-Size                                                     ENUMERATED
{ config2}                                        OPTIONAL, -- Need S
        uci-OnPUSCH                                              SetupRelease { UCI-
OnPUSCH}                                          OPTIONAL, -- Need M
        tp-pi2BPSK                                              ENUMERATED {enabled}
OPTIONAL, -- Need S
        ...
}
```

Hereinafter, codebook-based PUSCH transmission will be described. The codebook-based PUSCH transmission may be dynamically scheduled through DCI format 0_0 or 0_1, and may be semi-statically configured by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. The TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 2 given below.

[Equation 2]

$$T_{proc,2} = \max((N_2 + d_{2,1} + d_2)(2048 + 144)\kappa 2^{-\mu}T_c + T_{ext} + T_{switch},\ d_{2,2})$$

Each parameter in $T_{proc,2}$ described above in Equation 2 may have the following meaning.

- $N_2$: the number of symbols determined according to UE processing capability 1 or 2, based on the UE's capability, and numerology $\mu$. $N_2$ may have a value in Table 22 if UE processing capability 1 is reported according to the UE's capability report, and may have a value in Table 23 if UE processing capability 2 is reported, and if availability of UE processing capability 2 is configured through upper layer signaling.

[Table 22]

| $\mu$ | PUSCH preparation time $N_2$ [symbols] |
|---|---|
| 0 | 10 |
| 1 | 12 |
| 2 | 23 |
| 3 | 36 |

[Table 23]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.

- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3$ $Hz$, $N_f = 4096..$
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE may determine that the PUSCH preparation procedure time is insufficient if the first symbol of a PUSCH starts earlier than the first uplink symbol in which a CP starts after $T_{proc,2}$ from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[SBFD: SBFD overview]

In 3GPP, subband non-overlapping full duplex (SBFD) is being discussed as a new full duplex scheme based on NR. SBFD is a technology that utilizes a part of a downlink resource as an uplink resource in a TDD band (spectrum) of a frequency equal to or lower than 6 GHz, or equal to or higher than 6 GHz. Through this, the uplink coverage of a UE may be expanded as much as the amount of increased uplink transmission resources, and a base station may receive feedback relating to downlink transmission from the UE in the expanded uplink resources, so as to reduce feedback delay. In the disclosure, the UE may receive, from the base station, information on whether SBFD is supported, and a UE capable of performing uplink transmission in some of downlink resources may be referred to as an SBFD UE (SBFD-capable UE) for convenience. The SBFD scheme may be defined in the standard, and the following schemes may be considered for the SBFD UE to determine whether SBFD is supported in a specific cell (or a frequency or a frequency band).

First scheme: Besides the frame structure type of the existing unpaired spectrum (or time division duplex (TDD)) or paired spectrum (or frequency division duplex (FDD)), a different frame structure type (for example, frame structure type 2) may be introduced to define the above-described SBFD. The frame structure type 2 may be defined as being supported in the specific frequency or frequency band, or a base station may indicate whether SBFD is supported, to a UE by using at least one of system information or the higher layer signaling described above. The SBFD UE may receive the system information including whether SBFD is supported, and determine whether SBFD is supported in the specific cell (or frequency or frequency band).

Second scheme: Without defining a new frame structure type, it may be indicated whether SBFD is additionally supported at a specific frequency or frequency band of the existing unpaired spectrum (or TDD). The second scheme may define whether SBFD is additionally supported in a specific frequency or frequency band of the conventional unpaired spectrum, or a base station may indicate whether SBFD is supported, to a UE by using at least one of system information or the higher layer signaling described above. The SBFD UE may receive the system information including whether SBFD is supported, and determine whether SBFD is supported in the specific cell (or frequency or frequency band).

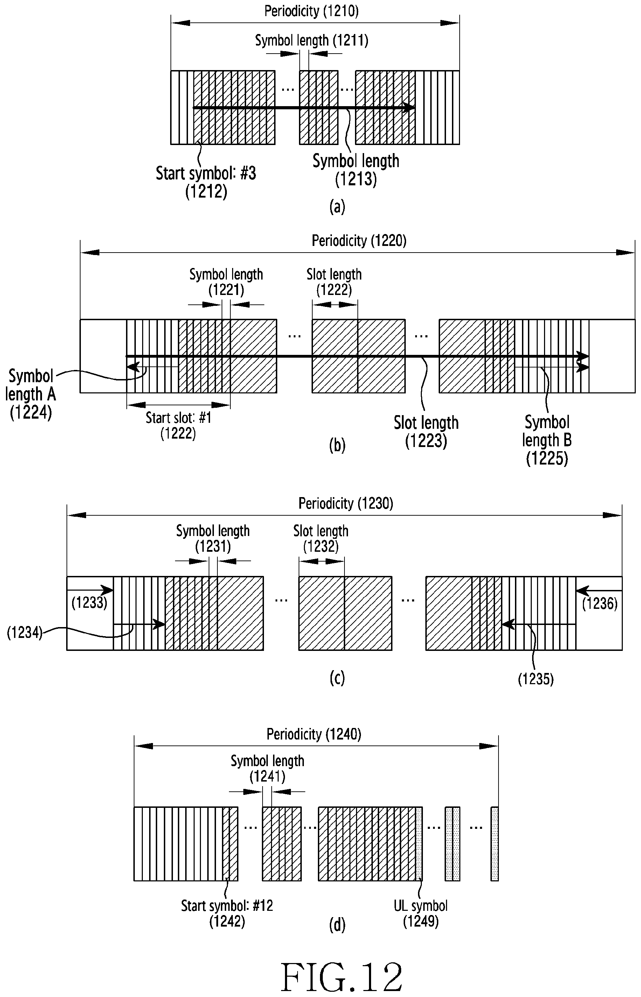

The information on whether SBFD is supported in the first and second schemes may be information (e.g., SBFD resource configuration information in FIG. 12) indirectly indicating whether SBFD is supported, by additionally configuring a part of a downlink resource as an uplink resource in addition to the configuration of TDD uplink (UL)-downlink (DL) resource configuration information indicating a downlink slot (or symbol) resource and an uplink slot (or symbol) resource in TDD, or may be information directly indicating whether SBFD is supported.

In the disclosure, the SBFD UE may receive a synchronization signal block (i.e., SSB) in an initial cell access for accessing a cell (or base station), so as to obtain cell synchronization. A process of obtaining the cell synchronization may be the same as for an SBFD UE and an existing TDD UE. Thereafter, the SBFD UE may determine whether the cell supports SBFD, through MIB acquisition, SIB acquisition, or a random access process.

The system information for transmitting information on whether SBFD is supported may be system information distinguished from and transmitted separately from system information for a UE (e.g., an existing TDD UE) supporting a different version of protocol in a cell, and the SBFD UE may obtain the entirety or part of the system information transmitted separately from the system information for the existing TDD UE, to determine whether SBFD is supported. If the SBFD UE obtains only the system information for the existing TDD UE or system information indicating that SBFD is not supported, the SBFD UE may determine that the cell (or base station) supports only TDD.

If the information on whether SBFD is supported is included in system information for a UE (e.g., an existing TDD UE) supporting a different version of protocol, the information on whether SBFD is supported may be inserted in the last part of the system information not to affect acquisition of the system information of the existing TDD UE. If the SBFD UE fails to obtain the information on whether SBFD is supported, which is inserted in the last part, or obtains information indicating that SBFD is not supported, the SBFD UE may determine that the cell (or base station) supports only TDD.

If the information on whether SBFD is supported is included in system information for a UE (e.g., an existing TDD UE) supporting a different version of protocol, the information on whether SBFD is supported may be transmitted through a separate PDSCH so as not to affect acquisition of the system information of the existing TDD UE. That is, a non-SBFD-supporting UE may receive a first SIB (or SIB1) including existing TDD-related system information through a first PDSCH. An SBFD-supporting UE may receive the first SIB (or SIB) including the existing TDD-related system information through the first PDSCH, and may receive a second SIB including SBFD-related system information through a second PDSCH. The first PDSCH and the second PDSCH may be scheduled through DCI transmitted through a first PDCCH and a second PDCCH, and a cyclic redundancy code (CRC) of the first PDCCH and the second PDCCH may be scrambled with the same RNTI (e.g., SI-RNTI). A search space for monitoring the second PDCCH may be obtained from system information of the first PDSCH, and if the same is not obtained (that is, if the system information of the first PDSCH does not include information on the search space), the second PDCCH may be received in the same search space as a search space of the first PDCCH.

As described above, when the SBFD UE determines that the cell (or base station) supports only TDD, the SBFD UE may perform a random access procedure and transmit or receive a data/control signal in the same manner as the existing TDD UE.

A base station may configure a separate random access resource for an existing TDD UE or an SBFD UE (e.g., an SBFD UE supporting duplex communication and an SBFD UE supporting half-duplex communication), and transmit configuration information (e.g., control information or configuration information indicating a time-frequency resource available for a PRACH) on the random access resource to the SBFD UE through system information. The system information for transmitting information on the random access resource may be system information distinguished from and transmitted separately from system information for a UE (e.g., an existing TDD UE) supporting a different version of protocol in a cell.

The base station configures a separate random access resource for each of the SBFD UE and a TDD UE supporting a different version of protocol, thereby being able to distinguish whether the TDD UE supporting the different version of protocol performs a random access or the SBFD UE performs a random access. For example, the separate random access resource configured for the SBFD UE may be a resource that the existing TDD UE determines as a downlink time resource, and the SBFD UE performs a random access through an uplink resource (or separate random access resource) configured in some frequencies of the downlink time resource, so that the base station may determine that the UE which has attempted the random access in the uplink resource is an SBFD UE.

Alternatively, the base station may not configure a separate random access resource for the SBFD UE, and may configure a common random access resource for all UEs in a cell. In this case, the configuration information on the random access resource may be transmitted to all the UEs in the cell through system information, and an SBFD UE having received the system information may perform a random access by using the random access resource. Thereafter, the SBFD UE may complete a random access process to enter an RRC connection mode for transmission or reception of data with the cell. After the RRC connection mode, the SBFD UE may receive, from the base station, a higher layer signal or a physical signal (e.g., L1 signaling) enabling determination that a partial frequency resource of the downlink time resource is configured as an uplink resource, and perform an SBFD operation, such as transmitting an uplink signal in the uplink resource.

When the SBFD UE determines that the cell supports SBFD, the SBFD UE transmits, to the base station, UE capability information including at least one of whether the UE supports SBFD, whether the UE supports full-duplex communication or half-duplex communication, and the number of transmission or reception antennas included in (or supported by) the UE, thereby notifying the base station that the UE attempting to access is an SBFD UE. Alternatively, when support of half-duplex communication is necessarily implemented for an SBFD UE, whether the half-duplex communication is supported may be omitted from the UE capability information. A report of the SBFD UE on the UE capability information may be reported to the base station through a random access process, may be reported to the base station after completion of the random access process, or may be reported to the base station after entering an RRC connection mode for transmission or reception of data with the cell.

The SBFD UE may support half-duplex communication in which only uplink transmission or downlink reception is performed at one time like an existing TDD UE, or may support full-duplex communication in which both uplink transmission and downlink reception are performed at one time. Therefore, the SBFD UE may report, to the base station through capability reporting, whether the SBFD UE supports the half-duplex communication or full-duplex communication, and after the reporting, the base station may configure, for the SBFD UE, whether the SBFD UE is to use half-duplex communication for transmission or reception or is to use full-duplex communication for transmission or reception. When the SBFD UE reports the UE capability for the half-duplex communication to the base station, since a duplexer generally does not exist, a switching gap for changing an RF between transmission and reception may be required in a case of operating in FDD or TDD.

In general, a UE may establish a wireless link with a network through a random access procedure, based on system information and synchronization with the network, obtained during a cell search process of a cell. As the random access, a contention-based scheme or a contention-free scheme may be used. If the UE performs cell selection and cell reselection in the initial access step, the contention-based scheme may be used, for example, in the case of transitioning from an RRC_IDLE (RRC idle) state to an RRC_CONNECTED (RRC connected) state, and for other purposes. The contention-free scheme may be used in order to reconfigure uplink synchronization in the case where downlink data reaches, in the case of handover, or in the case of location measurement.

[SBFD: Related to allocation of time resource in which SBFD operation is performed]

A time resource capable of an SBFD operation may be configured for an SBFD UE by a base station, and some slots or some symbols in a configuration period may be configured as SBFD slots or SBFD symbols. The UE may transmit a signal in an uplink channel through an SBFD uplink subband in the configured SBFD time resource. The period of the configuration may be a period of a TDD structure used in an existing wireless communication system, an SSB transmission period of the base station, a frame period (i.e., 10 ms), an integer multiple (e.g., 20 ms) of a frame period, or a period of a frame structure type newly defined for an SBFD operation. SBFD time resource allocation may use a method of additionally indicating whether SBFD is supported to a TDD structure, or a method of additionally defining a slot type dedicated to an SBFD operation to downlink, uplink, and special slots and using the slot type in a conventional TDD time resource allocation process.

When whether SBFD is supported is additionally indicated to a conventional TDD structure, the SBFD time resource configuration period may be a multiple of a TDD time resource configuration period for time alignment with a TDD system. In this case, within the SBFD configuration period, an SBFD time resource is indicated within a TDD configuration period length and then whether SBFD is supported may be determined for each TDD configuration period length unit.

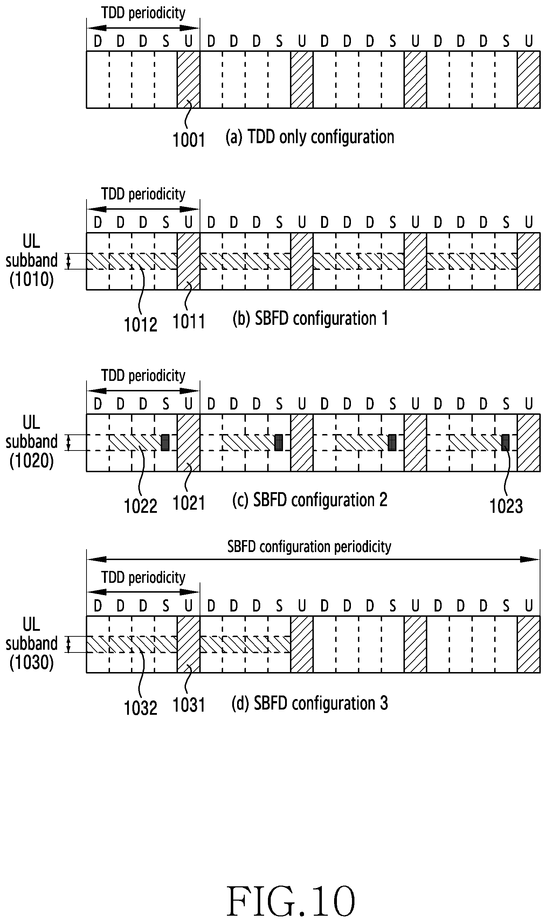

(a) to (b) of FIG. 10 are diagrams illustrating an example of time resource allocation according to SBFD time resource configuration information according to an embodiment of the disclosure, and (a) to (d) of FIG. 10 illustrate embodiments of a method of additionally indicating whether SBFD is supported to an existing TDD structure. In (a), (b), (c), and (d) of FIG. 10, reference numeral "D" indicates a DL slot to which only DL symbols are allocated in a TDD structure, "U" indicates a UL slot to which only UL symbols are allocated in a TDD structure, and "S" indicates a special slot to which DL symbols and UL symbols are allocated together in a TDD structure.

Referring to (a), (b), and (c) of FIG. illustrates a basic TDD resource allocation method, and (b) to (d) of FIG. 10 illustrate examples of an SBFD resource allocation method according to SBFD resource configuration information 1, 2, and 3. A UL slot 1001, 1011, 1021, or 1031 may be included in a TDD period, and an uplink subband 1010 or 1020 may be allocated in a frequency resource of a DL slot or special slot. A symbol to which an uplink subband is allocated may be called an SBFD symbol, and a slot including the SBFD symbol may be called an SBFD slot.

An SBFD symbol may be allocated in various patterns 1012, 1022, 1032, 1033, and 1034 in a TDD period as shown in the examples (b), (c), and (d) of of FIG. 10. All or some symbols in one slot may be allocated as SBFD symbols. (d) of FIG. 10 illustrates a method of configuring an SBFD operation time resource in a TDD period and then indicating whether an SBFD operation is performed every TDD period so as to configure an SBFD time resource in an SBFD operation period. Whether an SBFD operation is performed for each TDD period length may be indicated by using a bitmap method of using 0 as the index of the first TDD period in an SBFD configuration period and indicating whether an SBFD operation is performed for each index, by using bits, or a start and length indicator value (SLIV) method of encoding and indicating a start index and a TDD period length in which a consecutive SBFD operation is performed together. For example, in (d) of FIG. 10, whether an SBFD operation is performed may be indicated for each TDD period by using a bitmap method and "1100" or a SLIV method using a start index of 0 and a length of 2. The SBFD UE may receive time resource information on an SBFD symbol or slot in the SBFD configuration period from the base station before uplink transmission.

One symbol in a 5G wireless communication system may be classified into a downlink (DL) symbol for supporting downlink transmission, an uplink (UL) symbol for supporting uplink transmission, or a flexible symbol (F) configurable in a direction among uplink direction or downlink direction. In a case where whether an SBFD operation is performed is additionally indicated to a TDD structure, when symbols indicated by the base station for an SBFD operation include an UL or F symbol, the SBFD configuration information may have priority only for only DL symbols. For example, if an SBFD operation is configured for a UL or F symbol, the SBFD configuration information may be disregarded and only existing symbol configuration may be followed. Alternatively, the base station may indicate an SBFD operation only for a time resource configured as DL symbols.

For example, if a configuration of a time resource follows {symbol #0(DL), symbol #1(DL), symbol #2(DL), symbol #3(UL), symbol #4(F), symbol #5(DL), symbol #6(DL)} and the base station indicates an SBFD operation for symbol indexes "0-3", the configuration of the time resource may be {symbol #0(SBFD), symbol #1(SBFD), symbol #2(SBFD), symbol #3(UL), symbol #4(F), symbol #5(SBFD), symbol #6(DL)}. Alternatively, the base station may provide information on an SBFD operation indication only for DL symbols other than UL symbols or F symbols. For example, if a configuration of a time resource is {symbol #0(DL), symbol #1(DL), symbol #2(DL), symbol #3(DL), symbol #4(DL), symbol #5(UL), symbol #6(UL)} and the base station is to indicate an SBFD operation by using the index of a symbol, the index configurable by the base station may have only a value from 0 to 4. The following example may be given as the SBFD time resource configuration method.

Hereinafter, the disclosure provides a description of an example of an SBFD time resource configuration method using the number of consecutive slots and the position of a start slot when whether an SBFD operation is performed is additionally indicated to a TDD structure.

In the example, a method of indicating SBFD time resource information by using a consecutive slot length (*L*) and a start slot (*S*) in an SBFD system is described. In the example, a method of defining a resource indication value (start and length indicator value, SLIV) indicating SBFD time resource information is as shown in [Table 24] below. Through the example, the base station may indicate, to the UE, the positions of consecutive slots for an SBFD operation in an SBFD period.

[Table 24]

$$
\begin{aligned}
&\text{if } L - 1 \le \left\lfloor \frac{N_{slot}^{total}}{2} \right\rfloor \\
&\quad \text{SLIV} = N_{slot}^{total} \cdot (L - 1) + S \\
&\text{else} \\
&\quad \text{SLIV} = N_{slot}^{total} \cdot (N_{slot}^{total} - L + 1) + (N_{slot}^{total} - 1 - S) \\
&\text{Where } L \ge 1 \text{ and shall not exceed } N_{slot}^{total} - S.
\end{aligned}
$$

When the SBFD configuration period is *T*[ms] and a subcarrier spacing numerology is $\mu$, the number ($N_{slot}^{total}$) of all slots in the configuration period may be calculated by $2^{\mu} * T$. The slots in the period T[ms] may be indexed in ascending order in time. The index of the first slot in time among the slots in the period T[ms] is 0, and the index of the last slot is $N_{slot}^{total} - 1$. Based on the indexes, in Table 24, S may indicate the index of a slot where an SBFD subband exists and L may indicate the number of consecutive slots.

For reference, the disclosure is described based on a SLIV method in [Table 24] above, but may be expressed in the following method. In a SLIV method, S which is a start index of a slot where an SBFD subband exists and L which is the number of consecutive slots where an SBFD subband exists may be represented by being jointly encoded, but *S,L* may be separately indicated. That is, (*S,L*) may be configured for the UE by the base station, S is one value among 0,1, ..., and $N_{slot}^{total} - 1$, L is one value among 1,2,..., and $N_{slot}^{total}$, and *S + L* needs to be smaller than or equal to $N_{slot}^{total}$.

For reference, in Table 24 above, $N_{slot}^{total}$ has been defined as the number of all slots within an SBFD configuration period (T[ms]). However, when an SBFD UL subband is configured, a slot where the SBFD UL subband is configurable may be defined. In this case, $N_{slot}^{total}$ may be defined by slots where an SBFD UL subband is configurable among the slots within an SBFD configuration period (T[ms]).

A slot where an SBFD UL subband is configurable may be a slot including at least one downlink symbol and at least one flexible symbol. That is, a slot where an SBFD UL subband is not configurable may be a slot, all symbols of which are uplink symbols. Here, a downlink symbol, a flexible symbol, or an uplink symbol may be configured in a TDD configuration transmitted in a system information block (SIB). Here, a downlink symbol, a flexible symbol, or an uplink symbol may be configured in a TDD configuration transmitted in a dedicated RRC signal of the UE.

A slot where an SBFD UL subband is configurable may be a slot not including uplink symbols. That is, a slot where an SBFD UL subband is not configurable may be a slot including at least one uplink symbol. Here, a downlink symbol, a flexible symbol, or an uplink symbol may be configured in a TDD configuration transmitted in a system information block (SIB). Here, a downlink symbol, a flexible symbol, or an uplink symbol may be configured in a TDD configuration transmitted in a dedicated RRC signal of the UE.

A slot where an SBFD UL subband is not configurable may be a slot in which an SS/PBCH is received. The UE may receive the SS/PBCH to measure radio link failure (RLF) or downlink signal quality. If a symbol in which an SS/PBCH is received is configured as a UL subband, the SS/PBCH reception quality of the UE may degrade due to uplink transmission of another UE. Therefore, a slot in which an SS/PBCH is received may not be included in a slot where an SBFD UL subband is configurable.

A slot where an SBFD UL subband is not configurable may be a slot including a symbol in which a Type0-PDCCH CSS set is monitored. Here, a PDCCH received in a Type0-PDCCH CSS set is a PDCCH scheduling a PDSCH transmitting SIB1. If a PDCCH fails to be received in the Type0-PDCCH CSS set, the UE is unable to obtain information for cell access. Therefore, a slot including a symbol in which the Type0-PDCCH CSS set is monitored may not be included in a slot where an SBFD UL subband is configurable.

A slot where an SBFD UL subband is not configurable may be a slot including a symbol configured for a CSI-RS for tracking. Here, a CSI-RS for tracking is a reference signal configured by the base station to monitor a time-frequency change in a downlink channel. In order for UEs in a cell to successfully monitor a time-frequency change in a downlink channel, a slot including a symbol in which a CSI-RS for tracking is configured may not be included in a symbol where an SBFD UL subband is configurable.

As described above, when $N_{slot}^{total}$ is defined by slots where an SBFD UL subband is configurable among the slots within an SBFD configuration period ($T$[ms]), only slots where an SBFD UL subband is configurable may be indexed.

Hereinafter, the disclosure provides a description of an example of an SBFD time resource configuration method using the number of consecutive symbols and the position of a start symbol when whether an SBFD operation is performed is additionally indicated to a TDD structure.

In the example, a method of indicating SBFD time resource information by using a consecutive slot length ($L$) 1212 and a start slot ($S$) 1213 in an SBFD system illustrated in (a) of FIG. 12 is described. In the example, a method of defining a resource indication value indicating SBFD time resource information is as shown in [Table 25] below. $X$ above may be determined to be 12 or 14 according to an extended CP (ECP) or a normal CP (NCP) that is a type of a cyclic prefix (CP) configured by the base station. Through the example, the base station may indicate, to the UE, the positions of consecutive symbols for an SBFD operation in an SBFD period.

[Table 25]

$$\text{if } L - 1 \leq \left\lfloor \frac{N_{symbol}^{total}}{2} \right\rfloor$$
$$\text{SLIV} = N_{symbol}^{total} \cdot (L - 1) + S$$
$$\text{else}$$
$$\text{SLIV} = N_{symbol}^{total} \cdot (N_{symbol}^{total} - L + 1) + (N_{symbol}^{total} - 1 - S)$$
$$\text{Where } L \geq 1 \text{ and shall not exceed } N_{symbol}^{total} - S.$$

When the SBFD configuration period is $T$ [ms], a subcarier spacing numerology is $\mu$, and the number of all symbols in one slot is $X$, the number ($N_{symbol}^{total}$) of all symbols in the configuration period may be calculated by $2^{\mu} * T * X$. The symbols in the period T[ms] may be indexed in ascending order in time. The index of the first symbol in time among the symbols in the period T[ms] is 0, and the index of the last symbol is $N_{symbol}^{total} - 1$. Based on the indexes, in Table 25, S may indicate the index of a symbol where an SBFD subband exists and L may indicate the number of consecutive symbols.

For reference, the disclosure is described based on a SLIV method in [Table 25] above, but may be expressed in the following method. In a SLIV method, S which is a start index of a symbol where an SBFD subband exists and L which is the number of consecutive symbols where an SBFD subband exists may be represented by being jointly encoded, but S and L may be separately indicated. That is, (S,L) may be configured for the UE by the base station, S is one value among 0,1,..., and $N_{symbol}^{total} - 1$, L is one value among 1,2,..., and $N_{symbol}^{total}$, and S+L needs to be smaller than or equal to $N_{symbol}^{total}$.

For reference, in Table 25 above, $N_{symbol}^{total}$ has been defined as the number of all symbols within an SBFD configuration period (T[ms]). However, when an SBFD UL subband is configured, a symbol where the SBFD UL subband is configurable may be defined. In this case, $N_{symbol}^{total}$ may be defined by symbols where an SBFD UL subband is configurable among the symbols within an SBFD configuration period (T[ms]).

A symbol where an SBFD UL subband is configurable may include a downlink symbol and a flexible symbol. That is, a symbol where an SBFD UL subband is not configurable may be an uplink symbol. Here, a downlink symbol, a flexible symbol, or an uplink symbol may be configured in a TDD configuration transmitted in a system information block (SIB). Here, a downlink symbol, a flexible symbol, or an uplink symbol may be configured in a TDD configuration transmitted in a dedicated RRC signal of the UE.

A symbol where an SBFD UL subband is not configurable may be a symbol in which an SS/PBCH is received. The UE may receive the SS/PBCH to measure radio link failure (RLF) or downlink signal quality. If a symbol in which an SS/PBCH is received is configured as a UL subband, the SS/PBCH reception quality of the UE may degrade due to uplink transmission of another UE. Therefore, a symbol in which an SS/PBCH is received may not be included in a symbol where an SBFD UL subband is configurable.

A symbol where an SBFD UL subband is not configurable may be a symbol in which a Type0-PDCCH CSS set is monitored. Here, a PDCCH received in a Type0-PDCCH CSS set is a PDCCH scheduling a PDSCH transmitting SIB1. If a PDCCH fails to be received in the Type0-PDCCH CSS set, the UE is unable to obtain information for cell access. Therefore, a symbol in which the Type0-PDCCH CSS set is monitored may not be included in a symbol where an SBFD UL subband is configurable.

A symbol where an SBFD UL subband is not configurable may be a symbol configured for a CSI-RS for tracking. Here, a CSI-RS for tracking is a reference signal configured by the base station to monitor a time-frequency change in a downlink channel. In order for UEs in a cell to successfully monitor a time-frequency change in a downlink channel, a symbol in which a CSI-RS for tracking is configured may not be included in a symbol where an SBFD UL subband is configurable.

Additionally, a symbol where an SBFD UL subband is not configurable may be Ngap,1 symbols immediately after or Ngap,2 symbols immediately before the defined symbol where an SBFD UL subband is not configurable (an SS/PBCH symbol, a Type0-PDCCH CSS set symbol, a CSI-RS for tracking symbol, etc.). This is because, when an SBFD UL subband exists immediately after or immediately before symbols, the UE or base station is unable to satisfy a TX-to-RX switching gap or RX-to-TX switching gap. Therefore, some symbols immediately after or immediately before the symbol may not be used as an SBFD UL subband.

As described above, when $N_{symbol}^{total}$ is defined by symbols where an SBFD UL subband is configurable among the symbols within an SBFD configuration period (T[ms]), only symbols where an SBFD UL subband is configurable may be indexed.

Hereinafter, the disclosure provides a description of an example of an SBFD time resource configuration method using the number of consecutive slots, the position of a start slot, and a symbol length inside the slots at both ends when whether an SBFD operation is performed is additionally indicated to a TDD structure.

In the example, a method of indicating SBFD time resource information by using a consecutive slot length (L) 1223, a start slot (S) 1222, the lengths 1224 and 1225 of consecutive symbols inside the slots at both ends in an SBFD system illustrated in (b) of FIG. 12 is described. The SBFD configuration period is T[ms], a subcarier spacing numerology is μ, and the number ($N_{slot}^{total}$) of all slots in the configuration period may be calculated by $2^{\mu}$ * T. X that is the number of all symbols in one slot may be determined to be 12 or 14 according to an extended CP (ECP) or a normal CP (NCP) that is a type of a cyclic prefix (CP) configured by the base station. In the disclosure, the base station may express information on an SBFD slot including one or more SBFD symbols by using a SLIV according to an equation in [Table 24] above. Additionally, the base station may represent, by using A and B, the length of symbols where an SBFD operation is not performed, the symbols starting from the last symbol of each of the slots at both ends, thereby indicating, to the UE, the position of consecutive symbols for an SBFD operation within the SBFD period. The two lengths 1224 and 1225 of consecutive symbols may be expressed by a natural number from 0 to 14, an integer from 0 to 13, or a value of 0 to X-1 (X is a natural number equal to or greater than 2).

Hereinafter, the disclosure provides a description of an example of an SBFD time resource configuration method using the lengths of consecutive slots and symbols when whether an SBFD operation is performed is additionally indicated to a TDD structure.

In the example, a method of indicating SBFD time resource information by using the lengths of consecutive slots and symbols in an SBFD system illustrated in (c) of FIG. 12 is described. The base station may indicate, to the UE, the lengths 1233 and 1236 of consecutive slots not including SBFD symbols from both ends of an SBFD configuration period, and the lengths 1234 and 1235 of consecutive symbols where an SBFD operation is not performed, starting from the end points of the consecutive slots, thereby indicating, to the UE, the position of consecutive symbols for an SBFD operation

**EP 4 598 189 A1**

within the SBFD period. The lengths 1233 and 1236 of consecutive slots may be a natural number from 0 to $2^{\mu} * T - 1$ when the SBFD configuration period is T[ms] and a subcarier spacing numerology is $\mu$, and the two lengths 1234 and 1235 of consecutive symbols may be a natural number from 0 to 14.

Hereinafter, the disclosure provides a description of an example of an SBFD time resource configuration method using a start position of an SBFD time resource in an SBFD configuration period when whether an SBFD operation is performed is additionally indicated to a TDD structure.

In the example, a method of indicating SBFD time resource information by using a start index of consecutive SBFD symbols within an SBFD configuration period in an SBFD system illustrated in (d) of FIG. 12 is described. When the SBFD configuration period is $T$[ms], a subcarier spacing numerology is $\mu$, and the number of all symbols in one slot is $X$, the number ($N_{symbol}^{total}$) of all symbols in the configuration period may be calculated by $2^{\mu} * T * X$. $X$ above may be determined to be 12 or 14 according to an extended CP (ECP) or a normal CP (NCP) that is a type of a cyclic prefix (CP) configured by the base station. When the first symbol index in the SBFD period is 0, the base station may indicate the index of the first symbol among consecutive SBFD symbols to the UE, and assume that all symbols before an uplink or flexible symbol within the SBFD period are SBFD symbols. In a case of (d) of FIG. 12, all symbols from a symbol having symbol index #12 1242 to a symbol before an uplink symbol 1249 may be indicated as SBFD symbols.

Within an SBFD time resource configuration period, there may be one or more indicators indicating an SBFD time resource. Respective indicators may indicate different SBFD time resources consecutively allocated in an SBFD time resource configuration period. In a case of an SBFD configuration of additionally indicating whether SBFD is supported to a conventional TDD system, a different indicator may be designated according to each slot pattern of the TDD system. Alternatively, multiple indicators may be used within an SBFD configuration period to indicate one or more consecutive SBFD time resource groups.

FIG. 13is a diagram illustrating an example of SBFD time resource allocation using multiple indicators according to an embodiment of the disclosure.

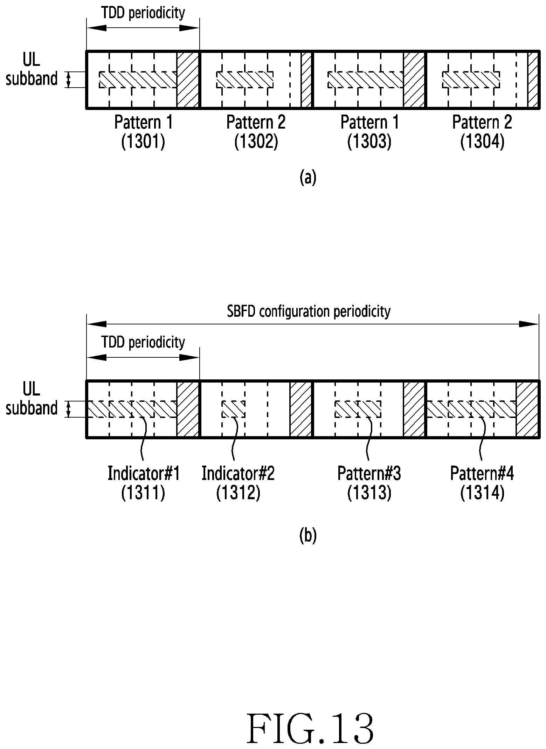

(a) of FIG. 13 is a diagram illustrating a case of indicating, for each pattern, whether an SBFD operation is performed to a TDD structure using two TDD patterns according to an embodiment of the disclosure. In this example, two indicators may be used for SBFD time resource areas indicated to pattern 1 1301 and 1303 and SBFD time resource areas indicated to pattern 2 1302 and 1304. (b) of FIG. 13 is a diagram illustrating a case of indicating, by using four indicators 1311, 1312, 1313, and 1314, whether an SBFD operation is performed to a TDD structure in an SBFD configuration period according to an embodiment of the disclosure. A total of four groups of SBFD time resource areas may be indicated within the SBFD configuration period by using respective indicators.

According to an embodiment of the disclosure, an SBFD time resource configuration period may be the same as a TDD configuration period. When two TDD patters exist in the TDD configuration period, indicators indicating two SBFD time resources may be configured for the UE. A first SBFD time resource among the two SBFD time resources may be applied to a first TDD pattern among the two TDD patterns and a second SBFD time resource may be applied to a second TDD pattern.

The period of the first TDD pattern is P1 [ms], the period of the second TDD pattern is P2 [ms], and the TDD configuration period may be P1+P2 [ms]. The first TDD pattern includes information for configuring whether symbols included in P1 [ms] are downlink, uplink, or flexible symbols, and the second TDD pattern includes information for configuring whether symbols included in P2 [ms] are downlink, uplink, or flexible symbols. The UE may apply the first TDD pattern to symbols included in first P1 [ms] among symbols included in P [ms], and apply the second TDD pattern to symbols included in subsequent P2 [ms].

Therefore, the first SBFD time resource may be configured for the UE in P1 [ms], and the second SBFD time resource may be configured in P2 [ms]. A first SBFD time resource configuration and a second SBFD time resource configuration may be indicated based on an SLIV equation.

Referring to Table 24, a first SBFD time resource configuration and a second SBFD time resource configuration may be indicated by slot-based SLIVs. As a first method, in an SLIV indicating a first SBFD time resource configuration and an SLIV indicating a second SBFD time resource configuration, $N_{slot}^{total}$ may be the number of slots included in P [ms]. The first slot among the slots included in the period P [ms] is considered to be 0, and the slots may be indexed in ascending order in time. S determined from the SLIV indicating the first SBFD time resource configuration is the index of a slot in which the first SBFD time resource starts, and L is the number of consecutive slots in which the first SBFD time resource exists. S determined from the SLIV indicating the second SBFD time resource configuration is the index of a slot in which the second SBFD time resource starts, and L is the number of consecutive slots in which the first SBFD time resource exists.

As a second method, $N_{slot}^{total}$ in an SLIV indicating a first SBFD time resource configuration may be the number of slots included in P1 [ms]. $N_{slot}^{total}$ in an SLIV indicating a second SBFD time resource configuration may be the number of slots included in P2 [ms]. When the SLIV indicating the first SBFD time resource configuration is interpreted, the first slot among the slots included in the period P1 [ms] is considered to be 0, and the slots may be indexed in ascending order in time. S determined from the SLIV indicating the first SBFD time resource configuration is the index of a slot in which the first SBFD time resource starts, and L is the number of consecutive slots in which the first SBFD time resource exists. When the SLIV indicating the second SBFD time resource configuration is interpreted, based on the index, the first slot among the slots included in the period P2 [ms] is considered to be 0, and the slots may be indexed in ascending order in time. S determined from the SLIV indicating the second SBFD time resource configuration is the index of a slot in which the second SBFD time resource starts, and based on the index, L is the number of consecutive slots in which the first SBFD time resource exists.

When two SBFD time resources are configured for the UE, an SBFD frequency resource corresponding to each SBFD time resource may be configured. According to the disclosure, even when two SBFD time resources are configured for the UE, an SBFD frequency resource corresponding to each SBFD time resource may be the same. That is, the base station may configure one SBFD frequency resource and configure two SBFD time resources. The UE may determine a first SBFD resource (time-frequency resource) by using the one SBFD frequency resource and a first SBFD time resource. In addition, the UE may determine a second SBFD resource (time-frequency resource) by using the one SBFD frequency resource and a second SBFD time resource.

SBFD time resource configuration information may be included in one or more messages among RRC, medium access control (MAC) control element (CE), or DCI to restrict a UE group using the SBFD time resource configuration information or determine a configuration information update period. For example, SBFD time resource configuration information included in an SIB 1 message may be cell-specific information applied to all UEs included in a corresponding cell. Next, SBFD time resource configuration information belonging to a dedicated RRC message may be UE-specific information. SBFD time resource configuration information of DCI or a MAC CE message may be used to update an SBFD time resource configuration within a shorter time compared to the SBFD time resource configuration information. In a case of dynamic SBFD time resource allocation using the DCI or MAC CE message, SBFD time resource information may be indicated using a slot format indicator. The following example may be given as an SBFD time resource configuration method using the slot format indicator. The slot format indicator may be transmitted to the UE with a direct value or may be indirectly transmitted to the UE through another indicator configured by the base station.

Hereinafter, the disclosure provides a description of an example of a method of configuring an SBFD time resource by using a pre-defined time domain pattern for all symbols in a slot.

In the example, an example of configuring an SBFD time resource by using a pre-defined time resource pattern for all symbols in a slot is described. The pattern may be a pattern indicating whether an SBFD operation is performed for a symbol in a slot in a method of additionally indicating whether SBFD is supported to a TDD structure. In a method of defining SBFD operation-dedicated slot and symbol types and using same in a conventional TDD time resource allocation process, the pattern may be a pattern indicating information relating to allocation of downlink, uplink, flexible, and SBFD symbols in a slot. The base station may use indication values allocated for each pattern to indicate the pattern. Table 26 below shows an example of patterns and indication values which may be used when whether SBFD is supported is additionally indicated to a TDD structure for symbols in a slot. 0 and 1 in each row may indicate a symbol where an SBFD operation is not performed and a symbol to which an SBFD operation is indicated.

[Table 26]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | 1 | 1 | 1 | 1 | 1 | 1 | 1 | 1 | 1 | 1 | 1 | 1 | 1 | 1 |
| 1 | 0 | 0 | 0 | 0 | 0 | 0 | 0 | 0 | 0 | 0 | 0 | 0 | 0 | 0 |
| 2 | 1 | 1 | 1 | 1 | 1 | 1 | 1 | 1 | 1 | 1 | 1 | 1 | 1 | 0 |
| ... | ... | ... | ... | ... | ... | ... | ... | ... | ... | ... | ... | ... | ... | ... |

In a case of the dynamic SBFD time resource configuration method, a minimum time (hereinafter, application time) required to apply dynamically indicated new SBFD time resource configuration information and an update period may be considered. In relation to the application time, immediately after updated SBFD time resource configuration information is received, after a particular slot length, a particular symbol length, or a particular delay time after the reception, the updated SBFD time resource configuration information may be applied to a UE operation. The UE may update SBFD time resource configuration information and use same in real communication after a TDD period immediately after the application time, a slot immediately after the application time, or a particular time designated by a higher node, immediately after passage of the application time. In a case of the dynamic SBFD time resource configuration method, SBFD time resource configuration information may be dynamically changed based on scheduling information without considering an application time or an update period. For example, different SBFD time resource configuration information may be indicated for each BWP and a used SBFD time resource configuration may be changed according to BWP switching. If an SBFD time resource configuration of the UE is updated and thus the UE is unable to use a DL reception resource in which an SBFD uplink subband belongs to a designated area, the UE may follow the example below to process a data sequence mapped to the DL reception resource. The UE may not receive data sequences of all downlink channels mapped to the DL reception resource, or may not operate only for reception of some data sequences among data sequences of downlink channels semi-statically or dynamically received.

When whether an SBFD operation is performed is additionally indicated to a conventional TDD structure in a 5G wireless communication system, some time resources may not support an SBFD operation for the reasons such as initial access, random access, or transmission of a reference signal. In a case of an unavailable symbol described above, even if an SBFD operation is indicated through the SBFD configuration, the indication may not be followed. That is, even if SBFD configuration information of the base station includes an SBFD operation indication for the unavailable symbol, the unavailable symbol may be a symbol where an SBFD operation is not performed. An operation for the unavailable symbol may be performed in the following method.

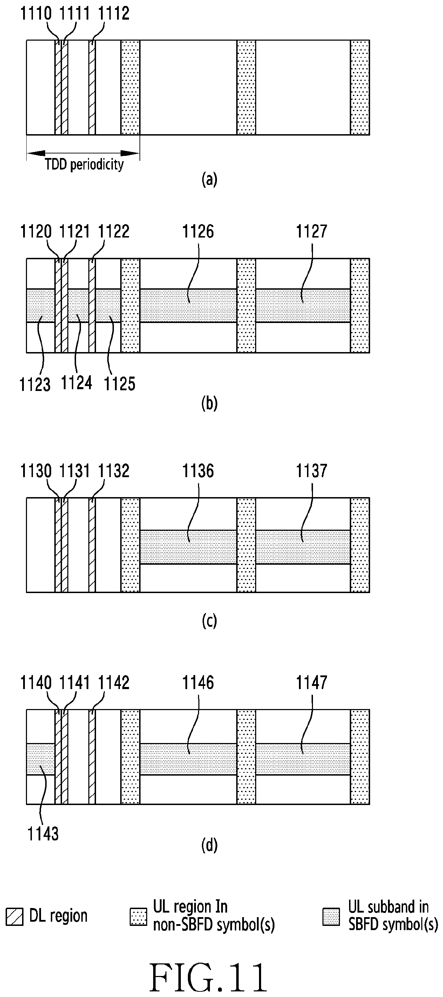

First, an SBFD configuration indication may be disregarded only for the unavailable symbol. FIG. 11 is a diagram illustrating examples of time axis resource allocation in a case where a symbol not supporting an SBFD operation is included due to initial access, random access, or transmission of a reference signal when a time resource for the SBFD operation is configured in an SBFD system according to an embodiment of the disclosure. (a) of FIG. 11 illustrates an example of conventional TDD time resource allocation wherein an SBFD resource is not allocated. (b), (c) and (d) of FIG. 11 illustrate examples of allocation of a time resource including an SBFD symbol which may occur in the UE when an SBFD operation is indicated for all DL symbols belonging to the TDD structure. (b) of FIG. 11 shows that an indicated SBFD operation is not performed only in the unavailable symbol, (c) of FIG. 11 illustrates that an SBFD operation is not performed in the entire slot including the unavailable symbol, and (d) of FIG. 11 is a diagram illustrating an example in which an SBFD operation is performed only in symbols before a resource to which the unavailable symbol is mapped, in the slot where the unavailable symbol exists. An SBFD operation may be indicated or not indicated in units of symbols or UEs with respect to the unavailable symbol and a symbol including same.

[SBFD: Determination of SBFD-applied slot/symbol in configured SBFD time resource]

Through an above embodiment, the UE may determine a slot/symbol in which an SBFD time resource is configured. However, the UE may not be always able to perform transmission or reception through an SBFD subband in a configured slot/symbol. That is, some slots/symbols among the configured slots/symbols may be interpreted as symbols in which an SBFD subband is not configured, and the UE may assume that the some slots/symbols are slots/symbols in which an SBFD time resource is configured, but there is no SBFD subband therein.

As a first method, the UE may assume that a symbol overlapping with particular symbols has no SBFD subband. That is, if slots/symbols in which an SBFD time resource is configured include the particular symbols, the symbols may be excluded.

A particular symbol may include at least one of a symbol in which an SS/PBCH is received, a symbol in which a Type0-PDCCH CSS set is monitored, or a symbol in which a CSI-RS for tracking is received. In addition, the particular symbol may include symbols immediately before or after the symbols.

As a second method, the UE may assume that there is no SBFD subband in a slot where a particular symbol exists. That is, if the particular symbol is included in a slot in which an SBFD time resource is configured, the slot may be excluded. In this method, the UE may determine whether an SBFD subband exists in units of slots. If the existence of an SBFD subband is possible in units of symbols in a slot, frequent TX-to-RX switching or RX-to-TX switching may occur to the UE. This requires a TX-to-RX switching gap or RX-to-TX switching gap as well as complexity of the UE.

As a third method, the UE may assume that, in a slot where a particular symbol exists, there is no SBFD subband in the particular symbol and subsequent symbols. That is, if the particular symbol is included in a slot in which an SBFD time resource is configured, the symbol and symbols after the symbol may be excluded.

As a fourth method, the UE may assume that, in a slot where a particular symbol exists, there is no SBFD subband in the particular symbol and preceding symbols. That is, if the particular symbol is included in a slot in which an SBFD time resource is configured, the symbol and symbols before the symbol may be excluded.

The third method and the fourth method may reduce the complexity of the UE or the TX-to-RX switching gap or RX-to-TX switching gap by allowing TX-to-RX switching or RX-to-TX switching only one time for the UE.

[SBFD: Subcarrier spacing in SBFD time resource]

A subcarrier spacing used for time resource allocation in the SBFD system may be determined as follows.

First, the subcarrier spacing may be assumed to be the same as that of an initial DL BWP. The initial DL BWP is a BWP in which the UE obtains SIB scheduling information at the time of initial access of a cell. Therefore, all UEs in the cell may obtain the same subcarrier spacing.

Second, the subcarrier spacing may be assumed to be the same as that of an initial UL BWP. The UE may receive the subcarrier spacing of the initial UL BWP through SIB1. The initial UL BWP is a BWP which may be used for physical random access channel (PRACH) transmission, msg3 PUSCH transmission, HARQ-ACK transmission for a msg4 PDSCH, etc. Here, msg3 and msg4 are messages transmitted or received between the UE and the base station for contention resolution in a random access procedure, as is well known.

Third, the subcarrier spacing may be determined based on the smaller value among the subcarrier spacing of the initial DL BWP and the subcarrier spacing of the initial UL BWP. A symbol corresponding to the smaller subcarrier spacing may completely include a symbol corresponding to the greater subcarrier spacing in the time domain. However, a symbol corresponding to the greater subcarrier spacing is unable to completely include a symbol corresponding to the smaller subcarrier spacing in the time domain. Therefore, in order to solve this problem, the subcarrier spacing may be determined based on the smaller value among the subcarrier spacing of the initial DL BWP and the subcarrier spacing of the initial UL BWP.

Forth, the subcarrier spacing may be separately configured for the UE by the base station. Here, the subcarrier spacing may be configured to satisfy at least one of the following condition 1, condition 2, and condition 3.

* Condition 1: The configured subcarrier spacing may be determined to have a value equal to or smaller than the smallest value among subcarrier spacings configurable for a DL BWP and subcarrier spacings configurable for a UL BWP.
* Condition 2: The configured subcarrier spacing may be determined to have a value equal to or smaller than the smallest value among subcarrier spacings configurable for a DL BWP.
* Condition 3: The configured subcarrier spacing may be determined to have a value equal to or smaller than the smallest value among subcarrier spacings configurable for a UL BWP.

In the above conditions, a subcarrier spacing configurable for a UL BWP may be included in FrequencyInfoUL or FrequencyInfoUL-SIB that is an information element (IE) of a higher layer signal, and a subcarrier spacing configurable for a DL BWP may be included in the higher layer signal FrequencyInfoDL or FrequencyInfoDL-SIB.

Fifth, as the subcarrier spacing, a subcarrier spacing used in a TDD configuration may be used. The subcarrier spacing used in the TDD configuration has a value configured by a higher layer signal (referenceSubcarrierSpacing).

In addition, in a case of a cell-specific SBFD system, one or more BWPs may exist in one cell, and each BWP may be configured to have a different subcarrier spacing. The smallest value among subcarrier spacings available in a valid cell at the time of configuration of an SBFD time resource may be used to prevent a resource grid arrangement problem.

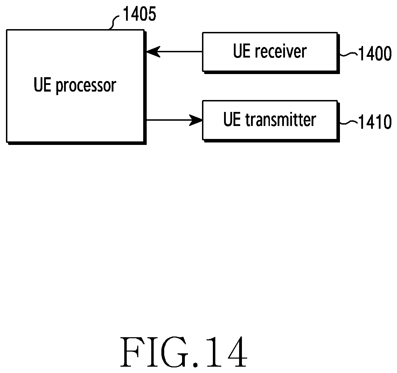

FIG. 14 illustrates a structure of a UE in a wireless communication system according to an embodiment of the disclosure.

Referring to FIG. 14, the UE may include a transceiver, which refers to a UE receiver 1400 and a UE transmitter 1410 as a whole, a memory (not illustrated), and a UE processor 1405 (or UE controller or processor). The UE transceiver 1400 and 1410, the memory, and the UE processor 1405 may operate according to the above-described communication methods of the UE. The UE processor 1405 may control operations of the UE according to not only the above-described respective embodiments but also combinations of at least one thereof. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

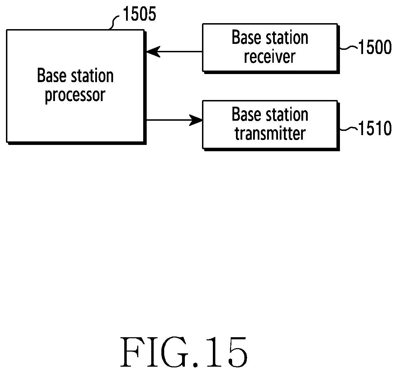

FIG. 15 illustrates a structure of a base station in a wireless communication system according to an embodiment of the disclosure.

Referring to FIG. 15, the base station may include a transceiver, which refers to a base station receiver 1500 and a base station transmitter 1510 as a whole, a memory (not illustrated), and a base station processor 1505 (or base station controller or processor). The base station transceiver 1500 and 1510, the memory, and the base station processor 1505 may operate according to the above-described communication methods of the base station. The base station processor 1505 may control operations of the base station according to not only the above-described respective embodiments but also combinations of at least one thereof. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include a storage medium such as a ROM, a RAM, a hard disk, a CD-ROM, or a DVD, or a combination of storage media. In addition, the memory may include multiple memories.

The processor may control a series of processes such that the base station can operate according to the above-described embodiments of the disclosure. For example, the processor may control components of the UE to receive DCI configured in two layers so as to simultaneously receive multiple PDSCHs. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving time resource configuration information for subband full duplex (SBFD) from a base station, the time resource configuration information including time location information for the SBFD and period information for the SBFD;

   identifying a time resource of a subband for the SBFD, based on the time resource configuration information; and

   transmitting an uplink signal to the base station, based on the time resource of the subband.

2. The method of claim 1, wherein the time resource of the subband for the SBFD is indicated by:

   a start and length indicator value (SLIV) method representing a position and a length of the time resource;

   a bitmap method representing the position of the time resource in units of bits; or

   an explicit indication method of indicating a time resource related to non-SBFD.

3. The method of claim 2, wherein the SLIV method comprises at least one of a method of indicating slot granularity of the time resource, a method of indicating symbol granularity, or a method of indicating both the slot granularity and the symbol granularity, and

   wherein the explicit indication method comprises:

   a method of indicating the number of slots of a time resource related to the non-SBFD from a start point in a period of a time resource, the number of symbols of a time resource related to the non-SBFD from a start point of a slot of a time resource for the SBFD, the number of slots of a time resource related to the non-SBFD from an end point in a period of a time resource, and the number of symbols of a time resource related to the non-SBFD from an end point of a slot of a time resource for the SBFD; or

   a method of indicating the number of slots of a time resource related to the non-SBFD from the start point in the period of the time resource and the number of symbols of a time resource related to the non-SBFD from a start point of a slot of a time resource for the SBFD.

4. The method of claim 1, wherein the uplink signal is transmitted based on a preconfigured application time.

5. A terminal (user equipment) in a wireless communication system, the terminal comprising:

   a transceiver; and

   a controller coupled to the transceiver,

   wherein the controller is configured to:

   receive time resource configuration information for subband full duplex (SBFD) from a base station, the time resource configuration information including time location information for the SBFD and period information for the SBFD;

identify a time resource of a subband for the SBFD, based on the time resource configuration information; and,
transmit an uplink signal to the base station, based on the subband and the time resource.

6. The terminal of claim 5, wherein the time resource of the subband for the SBFD is indicated by:

a start and length indicator value (SLIV) method representing a position and a length of the time resource;
a bitmap method representing the position of the time resource in units of bits; or
an explicit indication method of indicating a time resource related to non-SBFD.

7. The terminal of claim 6, wherein the SLIV method comprises at least one of a method of indicating slot granularity of the time resource, a method of indicating symbol granularity, or a method of indicating both the slot granularity and the symbol granularity, and
wherein the explicit indication method comprises:

a method of indicating the number of slots of a time resource related to the non-SBFD from a start point in a period of a time resource, the number of symbols of a time resource related to the non-SBFD from a start point of a slot of a time resource for the SBFD, the number of slots of a time resource related to the non-SBFD from an end point in a period of a time resource, and the number of symbols of a time resource related to the non-SBFD from an end point of a slot of a time resource for the SBFD; or
a method of indicating the number of slots of a time resource related to the non-SBFD from the start point in the period of the time resource and the number of symbols of a time resource related to the non-SBFD from a start point of a slot of a time resource for the SBFD.

8. The terminal of claim 5, wherein the uplink signal is transmitted based on a pre-configured application time.

9. A method performed by a base station in a wireless communication system, the method comprising:

transmitting time resource configuration information for subband full duplex (SBFD) to a terminal, the time resource configuration information including time location information for the SBFD and period information for the SBFD; and
receiving an uplink signal based on a time resource of a subband for the SBFD from the terminal,
wherein the time resource of the subband is identified by the terminal, based on the time resource configuration information.

10. The method of claim 9, wherein the time resource of the subband for the SBFD is indicated by:

a start and length indicator value (SLIV) method representing a position and a length of the time resource;
a bitmap method representing the position of the time resource in units of bits; or
an explicit indication method of indicating a time resource related to non-SBFD.

11. The method of claim 10, wherein the SLIV method comprises at least one of a method of indicating slot granularity of the time resource, a method of indicating symbol granularity, or a method of indicating both the slot granularity and the symbol granularity, and
wherein the explicit indication method comprises:

a method of indicating the number of slots of a time resource related to the non-SBFD from a start point in a period of a time resource, the number of symbols of a time resource related to the non-SBFD from a start point of a slot of a time resource for the SBFD, the number of slots of a time resource related to the non-SBFD from an end point in a period of a time resource, and the number of symbols of a time resource related to the non-SBFD from an end point of a slot of a time resource for the SBFD; or
a method of indicating the number of slots of a time resource related to the non-SBFD from the start point in the period of the time resource and the number of symbols of a time resource related to the non-SBFD from a start point of a slot of a time resource for the SBFD.

12. The method of claim 9, wherein the uplink signal is transmitted by the terminal, based on a preconfigured application time.

**13.** A base station in a wireless communication system, the base station comprising:

a transceiver; and
a controller coupled to the transceiver,
wherein the controller is configured to:

transmit time resource configuration information for subband full duplex (SBFD) to a terminal, the time resource configuration information including time location information for the SBFD and period information for the SBFD; and
receive an uplink signal based on a time resource of a subband for the SBFD from the terminal, and wherein the time resource of the subband is identified by the terminal, based on the time resource configuration information.

**14.** The base station of claim 13, wherein the time resource of the subband for the SBFD is indicated by:

a start and length indicator value (SLIV) method representing a position and a length of the time resource;
a bitmap method representing the position of the time resource in units of bits; or
an explicit indication method of indicating a time resource related to non-SBFD.

**15.** The base station of claim 14, wherein the SLIV method comprises at least one of a method of indicating slot granularity of the time resource, a method of indicating symbol granularity, or a method of indicating both the slot granularity and the symbol granularity, and
wherein the explicit indication method comprises:

a method of indicating the number of slots of a time resource related to the non-SBFD from a start point in a period of a time resource, the number of symbols of a time resource related to the non-SBFD from a start point of a slot of a time resource for the SBFD, the number of slots of a time resource related to the non-SBFD from an end point in a period of a time resource, and the number of symbols of a time resource related to the non-SBFD from an end point of a slot of a time resource for the SBFD; or
a method of indicating the number of slots of a time resource related to the non-SBFD from the start point in the period of the time resource and the number of symbols of a time resource related to the non-SBFD from a start point of a slot of a time resource for the SBFD.

One subframe
(110)

$N_{symb}^{subframe}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l)
(101)

Frequency

Time

$\overline{l} = 0$

$\overline{l} = 14 \cdot 2^{\mu} - 1$

$k = 0$

FIG.1

FIG.2

FIG.3

Duration
(404)

Frequency
resources(403)

UE bandwidth part (410)

Frequency

Time

Slot (420)

control resource set#1 (401)

control resource set#2 (402)

FIG.4

1 symbol
(501)

DMRS
(505)

1 PRB (502)

CCE
(504)

REG
(503)

FIG.5

FIG.6

RA type 0
(700)

715

Bitmap

RA type 1
(705)

720

Starting VRB

725

Length

Both RA type
0 & 1
(710)

730

1 bit for RA
type indication

735

Max{payload for RA type 0, payload for RA type 1}

# FIG.7

$$\text{Slot}\left[n \cdot \frac{2^{\mu_{PDCCH}}}{2^{\mu_{PDCCH}}}\right] + K_0 \ (810)$$

FIG.8

$\mu_{PDCCH}=1$

(900)

PDCCH

Slot n    Slot n+1

... t

$\mu_{PDSCH}=1$

... 

PDSCH

Slot n + $K_0$

t

$\mu_{PDCCH}=1$

(905)

PDCCH

Slot n    Slot n+1

... t

$\mu_{PDSCH}=2$

PDSCH

t

$Slot \left\lfloor n \cdot \dfrac{2^{\mu_{PDSCH}}}{2^{\mu_{PDSCH}}} \right\rfloor$    ...    $Slot \left\lfloor n \cdot \dfrac{2^{\mu_{PDSCH}}}{2^{\mu_{PDSCH}}} \right\rfloor + K_0$

# FIG.9

(a) TDD only configuration

(b) SBFD configuration 1

(c) SBFD configuration 2

(d) SBFD configuration 3

FIG.10

1110 1111 1112

TDD periodicity

(a)

1120 1121 1122    1126        1127

1123  1124  1125

(b)

1130 1131 1132    1136        1137

(c)

1140 1141 1142    1146        1147

1143

(d)

DL region    UL region In
non-SBFD symbol(s)    UL subband in
SBFD symbol(s)

FIG.11

Periodicity (1210)

Symbol length (1211)

Symbol length
(1213)

Start symbol: #3
(1212)

(a)

Periodicity (1220)

Symbol length
(1221)

Slot length
(1222)

Symbol
length A
(1224)

Start slot: #1
(1222)

Slot length
(1223)

Symbol
length B
(1225)

(b)

Periodicity (1230)

Symbol length
(1231)

Slot length
(1232)

(1233)

(1234)

(1236)

(1235)

(c)

Periodicity (1240)

Symbol length
(1241)

Start symbol: #12
(1242)

UL symbol
(1249)

(d)

FIG.12

TDD periodicity

UL subband

Pattern 1 (1301)     Pattern 2 (1302)     Pattern 1 (1303)     Pattern 2 (1304)

(a)

SBFD configuration periodicity

TDD periodicity

UL subband

Indicator#1 (1311)     Indicator#2 (1312)     Pattern#3 (1313)     Pattern#4 (1314)

(b)

# FIG.13

1405

UE processor

UE receiver ~1400

UE transmitter ~1410

FIG.14

1505

Base station
processor

Base station
receiver ~1500

Base station
transmitter ~1510

# FIG.15

## INTERNATIONAL SEARCH REPORT

| International application No. |
| --- |
| **PCT/KR2023/017067** |

| A. | CLASSIFICATION OF SUBJECT MATTER |
| --- | --- |

**H04W 72/04**(2009.01)i; **H04L 5/14**(2006.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01); H04L 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD(subband full duplex), 시간 자원(time resource), 위치(location), 주기 (period), 상향링크(uplink)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | XIAOMI. Discussion on subband non-overlapping full duplex. R1-2211362, 3GPP TSG RAN WG1 #111. Toulouse, France. 07 November 2022. <br> See section 2. | 1-15 |
| A | NOKIA et al. On subband non-overlapping full duplex for NR. R1-2212284, 3GPP TSG RAN WG1 #111. Toulouse, France. 07 November 2022. <br> See sections 1-2.3.8. | 1-15 |
| A | NEW H3C. Discussion for subband non-overlapping full duplex. R1-2206108, 3GPP TSG RAN WG1 #110. Toulouse, France. 12 August 2022. <br> See sections 1-3.3. | 1-15 |
| A | US 2021-0320779 A1 (QUALCOMM INCORPORATED) 14 October 2021 (2021-10-14) <br> See paragraphs [0034]-[0110]; and figures 1-14. | 1-15 |
| A | US 2021-0377926 A1 (QUALCOMM INCORPORATED) 02 December 2021 (2021-12-02) <br> See paragraphs [0137]-[0402]; and figures 1-19. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 February 2024** | **14 February 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/017067** |

| Patent document cited in search report | | | Publication date (day/month/year) | Patent family member(s) | | | Publication date (day/month/year) |
| --- | --- | --- | --- | --- | --- | --- | --- |
| US | 2021-0320779 | A1 | 14 October 2021 | None | | | |
| US | 2021-0377926 | A1 | 02 December 2021 | CN | 115668848 | A | 31 January 2023 |
| | | | | EP | 4158972 | A1 | 05 April 2023 |
| | | | | US | 11622347 | B2 | 04 April 2023 |
| | | | | US | 2023-0232378 | A1 | 20 July 2023 |
| | | | | WO | 2021-247288 | A1 | 09 December 2021 |

Form PCT/ISA/210 (patent family annex) (July 2022)